(19) **Europäisches Patentamt**

**European Patent Office**

**Office européen des brevets**

(11) **EP 0 739 589 B1**

(12) **EUROPEAN PATENT SPECIFICATION**

(45) Date of publication and mention
of the grant of the patent:
**13.06.2001 Bulletin 2001/24**

(51) Int Cl.[7]: **A23D 9/00**, C11C 3/00,
A23L 1/30

(21) Application number: **96200999.9**

(22) Date of filing: **16.04.1996**

(54) **Triglycerides, rich in Polyunsaturated fatty acids**

An polyungesättigten Fettsäuren reiche Triglyceride

Triglycérides, riches en acides gras polyinsaturés

(84) Designated Contracting States:
**AT BE CH DE DK ES FR GB GR IE IT LI NL PT SE**

(30) Priority: **28.04.1995 EP 95302942**

(43) Date of publication of application:
**30.10.1996 Bulletin 1996/44**

(73) Proprietor: **LODERS CROKLAAN B.V.**
**1521 AX Wormerveer (NL)**

(72) Inventors:
• **Cain, Frederick William**
**2271 VL Voorburg (NL)**
• **McNeill, Gerald Patrick**
**Rushden NN10 9LZ (GB)**
• **Moore, Stephan Raymond**
**Thrapston, Northamptonshire (GB)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
EP-A- 0 265 699     EP-A- 0 298 293
EP-A- 0 609 001     WO-A- 91/09597
WO-A- 94/24889      US-A- 5 151 291

• **PATENT ABSTRACTS OF JAPAN vol. 17, no. 429**
**(C-1095), 10 August 1993 & JP-A-05 095792**
**(AGENCY OF IND SCIENCE & TECHNOL), 20**
**April 1993,**

• **BIOSCIENCE BIOTECHNOLOGY**
**BIOCHEMISTRY, vol. 57, no. 12, 1993, TOKYO**
**JP, pages 2202-2204, XP002010247 Y. ENDO ET**
**AL.: "Retarded autoxidation of sardine oil with**
**oleate"**

• **DATABASE WPI Week 9344 Derwent**
**Publications Ltd., London, GB; AN 93-348685**
**XP002010253 & JP-A-05 255 692 (FUJI OIL CO**
**LTD) , 5 October 1993**

• **JOURNAL OF THE AMERICAN OIL CHEMISTS'**
**SOCIETY, vol. 69, no. 10, 1992, CHAMPAIGN US,**
**pages 1041-1042, XP002010248 R. SRIDHAR ET**
**AL.: "Incorporation of eicosapentaenoic and**
**docosahexaenoic acids into groundnut oil by**
**lipase-catalyzed ester interchange"**

• **JOURNAL OF THE JAPAN OIL CHEMISTS'**
**SOCIETY, vol. 42, no. 1, 1993, JP, pages 30-35,**
**XP002010249 T. TOYOSHIMA ET AL.:**
**"Preparation of polyunsaturated triacylglycerols**
**via transesterification catalysed by immobilized**
**lipase"**

• **JOURNAL OF FERMENTATION AND**
**BIOENGINEERING, vol. 75, no. 4, 1993, pages**
**259-264, XP002010250 S. ADACHI ET AL.:**
**"Acidolysis of sardine oil by lipase to**
**concentrate eicosapentaenoic and**
**docosahexaenoic acids in glycerides"**

• **JOURNAL OF THE AMERICAN OIL CHEMISTS'**
**SOCIETY, vol. 71, no. 3, 1994, CHAMPAIGN US,**
**pages 331-334, XP002010251 YUKIHISA**
**TANAKA ET AL.: "Synthesis of**
**docosahexaenoic acid-rich triglyceride with**
**immobilized Chromobacterium viscosum**
**lipase"**

- JOURNAL OF THE AMERICAN OIL CHEMISTS' SOCIETY, vol. 72, no. 2, 1995, CHAMPAIGN US, pages 239-243, XP002010252 S.B. PEDERSEN ET AL.: "Studies of the fatty acid specificity of the lipase from Rhizomucor miehei toward 20:1n-9, 20:5n-3, 22:1n-9 and 22:6n-3"

**Description**

According to EP 265 699 fats with a superior digestibility and absorptivity are obtained, when these fats are composed of triglycerides having a specific amount of $C_8$ to $C_{14}$ fatty acid residues at the 2-position, while residues with $C_{18}$ or higher fatty acids are bonded at the 1.3-positions. Typical examples of the $C_{18}$ and higher fatty acids are polyunsaturated fatty acids, such as arachidonic acid, eicosapentenoic acid and dodecahexenoic acid. However nothing is disclosed about fat compositions that combine in the fat saturated fatty acid residues and at least two different long chain polyunsaturated fatty acid residues. In WO 90/04012 it is disclosed that triglycerides that contain saturated $C_8/C_{10}$ fatty acid residues in 1.3 and simultaneously a polyunsaturated fatty acid residue (in particular DHA) in the 2-position, have beneficial nutritional properties, in particular for enteral or parenteral purposes. However again, nothing is disclosed about fat compositions that contain in the fat specific amounts of saturated and two different polyunsaturated fatty acid residues.

From WO 94/00044 it is known that fatblends that contain unhardened fish oil have significant health benefits. Fish oil often contains appreciable amounts of two different polyunsaturated fatty acids, e.g. DHA and EPA. However it is also known that fish oil has a number of draw backs, such as a low oxidative stability (e.g. noticed as off taste during storage at ambient temperature). Further fish oils do not have structuring properties, which makes it difficult to apply them in fat compositions wherein a structuring agent is required in order to give the fat composition a performance, that is desired to make the fat applicable in foodproducts.

From Endo c.s in Bioscience Biotechn. Biochem. 57 (12) 1993 pages 2202-2024 it is known, that incorporation of myristic acid groups into sardine oil leads to a product with a slightly improved oxidation rate, whereas incorporation of stearic acid in the sardine oil hardly had any effect on the oxidation rate. This incorporation of saturated fatty acid is performed by an enzymic process, applying Candida cylindracea or lypozyme as an enzyme. It is taught that starting from sardine oil with about 8 % DHA and 12 % EPA, products are obtained with a decreased amount of total long chain polyunsaturated fatty acids (about 11 % if $C_{14:0}$ was incorporated and about 17.5 % if stearic acid was incorporated).

Therefore, above document does not disclose triglycerides that contain at least 20 wt% of a most abundant long chain polyunsaturated fatty acid in combination with at least 2 % of saturated $C_2$-$C_{12}$ or $C_{20}$-$C_{24}$ fatty acids.

US 5,151,291 discloses triglycerides that are rich in EPA and that also contain "higher fatty acid residues". The higher fatty acid residues are defined as saturated fatty acid with at least 14 C-atoms, but also DHA could be considered as such. The products obtained must combine a high EPA level with a high melting point in order to make them suitable as margarine fat. Because of above requirements the triglyceride products never will combine levels of a most abundant long chain polyunsaturated fatty - acid of more than 20 % with the presence of a second most abundant long chain polyunsaturated fatty acid in a ratio between these two LCPUFA's of more than 2, while also at least 2 % saturated $C_2$-$C_{12}$ or $C_{20}$-$C_{24}$ fatty acid will be present in these triglycerides.

We have performed a study to find out, whether fat compositions existed, that could overcome the draw backs of the known fat compositions, while they would retain the beneficial effects of the presence of relatively high amounts of polyunsaturated fatty acids. This study has resulted in the finding of novel fats, that combine the following beneficial product properties:

- our novel fats display better oxidative stability than triglycerides with similar compositions, however not having our levels of saturated fatty acids present;

- our novel fats are better for the development of the brain, in particular when consumed by infants. This effect is due to the relatively high levels of dodecahexenoic acid (DHA) in our fats;

- our novel fats also can contain relatively high levels of eicosapentenoic acid (EPA), which makes our fats healthier, due to the effect of EPA on coronary diseases;

- our novel fats display a lower calorific behaviour.
  This is due to the presence of the short chain saturated fatty acid, which will decrease the molecular weight of our fats and thereby will decrease simultaneously its caloric contents. Fats, that contain long chain saturated fatty acids, such as behenic acid, display a reduced fat absorption by the body and thus display a decreased digestibility;

- our novel fats display better structuring properties than fats without the saturated fatty acids;

- our novel fats can be obtained as a result of interesterification reactions, in particular enzymic interesterification, which results in fats with a better triglyceride-distribution than known fats. Simultaneously these fats will display an improved melting behaviour as our fats will hardly contain any trisaturated triglycerides.

- our interesterified fats will also give better digestion of polyunsaturated fatty acids because, as a result of the interesterification with short or medium chain fatty acids tripolyunsaturated triglycerides will be hardly present in our fats.

So our inventions concerns with novel fats, that display one or more of above beneficial effects. Our novel fats can be described as a triglyceride-composition, comprising at least two long chain poly-unsaturated fatty acids $L_1$ and $L_2$, both having at least 3 unsaturations and having at least 20 carbon atoms from which $L_1$ is the most abundant and $L_2$ is the second most abundant, wherein the triglyceride composition contains at least 20 wt% of $L_1$, while the weight ratio $L_1:L_2$ is at least 2, and the triglyceride composition also contains at least 2 wt% preferably at least 5 wt%, more preferably at least 15 wt%, most preferably at least 30 wt% of saturated fatty acids with 2-12 and/or 20-24 carbon atoms, whereas the triglyceride composition does not contain more than 10 wt% of saturated fatty acids with 16-18 carbon atoms, while at least 5 wt % of the saturated $C_2$-$C_{12}$ or $C_{20}$ - $C_{24}$ fatty acid residues is bonded on a triglyceride molecule, wherein at least $L_1$ and/or $L_2$ is present.

Preferred fats are triglyceride compositions according to claim 1, wherein the amount of $L_1$ is more than 30 wt%, while the weight ratio $L_1:L_2$ is at least 3, while triglyceride compositions according to claims 1 or 2, wherein the amount of $L_1$ is at least 40 wt% and the weight ratio of $L_1:L_2$ is at least 3.5 are even more preferred.

The most preferred $C_2$-$C_{12}$ saturated fatty acids are acetic acid, butyric acid, octanoic acid, and lauric acid. It was found, that fats with relatively low levels of $C_{16}$-$C_{18}$ saturated fatty acids could be obtained. Advantageously the level of $C_{16}$-$C_{18}$ saturated fatty acids is less than 8 wt%, in particular less than 5 wt%.

The most abundant polyunsaturated fatty acid L, is preferably DHA (= $C_{22:6}$). The second most abundant polyunsaturated fatty acid advantageously is EPA ($C_{20:5}$). Very useful triglycerides are obtained, when $L_1$ = EPA and $L_2$ = DHA.

We found that the best oxidative stability was obtained, if at least 5 wt%, preferably at least 10 wt%, most preferably at least 20 wt% of the saturated $C_2$ -$C_{12}$ or $C_{20}$ - $C_{24}$ fatty acid residues is bonded on a triglyceride molecule, wherein at least $L_1$ and/or $L_2$ is present.

Our triglycerides can be applied as such in foodproducts, however it can also be very suitable to blend our novel fats first, before applying them. Therefore part of our invention is also a blend of triglycerides, comprising

| 0.3 - 95 wt% | of triglycerides according to claims 1 - 7, and |
|---|---|
| 99.7 - 5 wt% | of a complementary fat, having a solid fat index at 10°C ($N_{10}$) that is either at least 5% more, or at least 5% less than the $N_{10}$ of the triglycerides according to claims 1 - 7. |

Above blends suitably can be composed of 5-80 wt%, in particular 20-70 wt% of the triglycerides according to claims 1 - 7, and 95 - 20 wt%, in particular 80-30 wt% of the complementary fat.

Many types of complementary fat could be applied. However we prefer to use complementary fats having a solid fat content (NMR-pulse; not stabilized) of more than 15 at 20°C, preferably more than 20. The N-values were measured on fats subjected to the following T-regime: 5 minutes at 60°C, 60 minutes at 0°C and 30 minutes at the measuring temperature.

Very useful complementary fats for our blends can be selected from cocoa butter equivalents, cocoa butter, palm oil or fractions thereof, palmkernel oil or fractions thereof, interesterified mixtures of above fats or fractions or hardened components thereof, or from liquid oil, such as sunflower oil, high oleic sunflower oil, soyabean oil, rapeseed oil, cottonseed oil, safflower oil, high oleic safflower oil, maize oil, MCT oils or fish oils.

The blends so obtained display a solid fat content (NMR-pulse; not stabilized) of 0-85, preferably 10 - 70, most preferably 20 - 60 at 5°C and less than 30, preferably < 20, most preferably < 5 at 35°C.

Although our fats already have an improved oxidative stability, we found that this stability can be further improved when our blends contain an effective amount of an oxidation stabilizer, selected from the group consisting of: natural or synthetic tocopherols, other natural antioxidants, BHT, BHA, free radical scavengers, enzymes with antioxidant properties.

Effective amounts can range from 100 ppm to 5 wt% (on fat).

Part of our invention are also the foodproducts, comprising a fat phase, such as spreads, margarine, cream alternative, infant food, chocolate, confectionery, bakery products, sauces, ice-creams, ice-cream coatings, cheese, soups, mayonnaise, dressings, enteral or parental products, wherein the fat phase contains a fat according to claims 1-13.

Our fats can be obtained by preparing the pure triglycerides and blending these in the required ratios. However a very useful method for the preparation of our blends is an interesterification of a (non-hardened) fish oil with a saturated fatty acid. This interesterification can be performed by using an enzyme. In that case enzymes can be applied, that display a specificity for e.g. long chain polyunsaturated fatty acids over saturated fatty acids, or that display a preference for one long chain polyunsaturated fatty acid over another long chain polyunsaturated fatty acid.

In our example I we have set out another possible interesterification method for the preparation of our novel fats. According to this method a fish oil is first subjected to a glycerolysis in the presence of a lipase. The crude reaction product obtained is enriched in long chain polyunsaturated fatty acids. This crude product is reconverted to triglycerides by performing an interesterification, using a fat high in saturated fatty acids.

Other methods to prepare our novel fats are illustrated by our other examples.

LIST OF USED CODES AND THEIR EXPLANATION

| | |
|---|---|
| wf(TUNA)f = TUNAf = | The olein fraction of semi refined tuna oil obtained by low temperature solvent fractionation, having at least 35 % of DHA. |
| (BOO)s = | The stearin fraction of an enzymic interesterified blend of high oleic sunflower oil and behenic acid. |
| fhPO = | Fully hardened palm oil. |
| CCB = | Cocoa butter. |
| POf37 = | Partially hardened palm oil olein fraction melting point of 37°C. |
| CN = | Coconut oil. |
| CNs = | Coconut oil stearin fraction. |
| nPOm = | Wet fractionated palm oil mid fraction. |
| df(PO)f = | Dry fractionated palm oil olein fraction. |
| HS1 = Hardstock = | The stearin fraction of a chemical interesterrified blend of fully hardened palm oil and a fully hardened palm kernel olein fraction. |
| SF = | Sunflower oil. |
| PO = | Palm oil. |
| in = | Interesterified. |

EXAMPLE I

A fish oil enriched in 20:5 and 22:6 is prepared by reacting menhaden oil (composition given in table 1.) with glycerol in the presence of *Pseudomonas cepacia* lipase at a temperature of 37°C. The ratio of oil to glycerol is 3 (wt/wt) and the quantity of lipase is 1% by weight on oil. 5% water by weight is present in the glycerol. After 48 hours the reaction is terminated by heating to 100°C and the glycerol is separated from the reaction mixture. The triglycerides are separated from the glyceride fraction by adsorption of the partial glycerides and the free fatty acids (FFA) onto silica, to give the enriched oil of composition shown in table 1. This oil is interesterified with hardened high erucic acid rapeseed oil (composition in table 1.) using a lipase catalyst (*Rhizomucor miehei*), to give the final product oil with a composition given in table 1. All the above processes are carried out under nitrogen to prevent deterioration of the oil.

Table 1. Fatty acid composition (wt%).

| | C14:0 | C16:0 | C16:1 | C16:u | C18:0 | C18:1 | C18:2 | C18:3 | C18:4 | C20:0 | C20:1 | C20:5 | C20:u | C22:0 | C22:1 | C22:5 | C22:6 | C22:u | C24:0 |
|---|---|---|---|---|---|---|---|---|---|---|---|---|---|---|---|---|---|---|---|
| Original oil | 8.3 | 19.6 | 11.9 | 6.5 | 3.4 | 12.4 | 1.3 | 1.5 | 2.5 | 0.8 | 0.3 | 14.5 | 3.6 | 0.0 | 0.3 | 2.5 | 6.5 | 1.3 | 0.0 |
| Enriched oil | 0.3 | 4.3 | 6.7 | 3.8 | 1.5 | 16.9 | 1.8 | 1.7 | 3.5 | 1.0 | 2.8 | 28.1 | 6.8 | 0.0 | 0.0 | 5.6 | 13.6 | 1.9 | 0.0 |
| Hardened high erucic acid rapeseed oil (HEAR oil) | 0.0 | 3.3 | 0.0 | 0.0 | 36.0 | 0.0 | 0.0 | 0.0 | 0.0 | 8.9 | 0.0 | 0.0 | 0.0 | 49.2 | 0.0 | 0.0 | 0.0 | 0.0 | 2.6 |
| 88% enriched fish oil + 12% hardened HEAR oil | 0.3 | 4.2 | 5.9 | 3.3 | 5.6 | 14.9 | 1.6 | 1.5 | 3.1 | 1.9 | 2.5 | 24.7 | 6.0 | 5.9 | 0.0 | 4.9 | 12.0 | 1.7 | 0.3 |

EP 0 739 589 B1

EXAMPLE II

A low temperature solvent fractionation at -70°C was done on semi refined tuna oil with the composition , mentioned in table II, under the conditions as mentioned in "Progress in the chemistry of fats and other lipids" vol. 3 Holman R.T. et al 1995, using 4 L of acetone per Kg tuna oil to enrich the oil in DHA and EPA. After removal of the acetone the olein fraction of the tuna oil (= wf(tuna)f) with the composition, mentioned in table 2, was obtained. This fraction was stored in the freezer under nitrogen.

All the ingredients for the enzymic interesterification were stored at ambient for at least one hour. All oils were used as liquid oils. To the tuna oil olein fraction 400 ppm of anti-oxidant (BHT) was added.

The tuna oil olein fraction was divided in different portions. Then the liquid complementary fat was added to each of the tuna oil olein fractions and mixed in. A sample was taken for carbon number and FAME analyses. For the enzymic interesterification a 1,3 specific lipase (*Rhizomucor Miehei)* was used. The lipase was added to the mixed oils in a weight ratio of 40:1 oil:lipase. A nitrogen blanket was put over the mixture to prevent deterioration of the oil. The reaction mixture was put in a magnetic stirred heatblock and the temperature was adjusted to 60°C. After 96 hours the reaction was stopped.

The samples were cleaned through an alumina column to remove FFA, mono- and diglycerides. Carbon number and FAME analyses were done via GC on the samples before and after lipase treatment.

Two methods were used to prove that at least 5% of the total amount of C2-C12 and/or C20-C24 was bonded on a triglyceride molecule with L1 and/or L2. The first method involves a calculation and gives the maximum amount which is bonded on a triglyceride molecule with L1 and / or L2. The second method which involves an analytical method gives some information about the minimum amount which is bonded on the same triglyceride molecule with L1 and / or L2.

A statistical programm was used to calculate a carbon number based on the randomized distribution of the fatty acids in a triglyceride molecule. This programm was checked by using the FAME results of a (random) chemical interesterification for a standard interesterified fat mix from palm oil stearin/palm kernel stearin and comparing the calculated carbon number profile with the measured carbon number profile (see table 3). The differences were very small so that it was concluded that the programm gives the correct results. Then the enzymic interesterification according to the invention was tested. The FAME and carbon number of the enzymic interesterified product was measured. The measured carbon number was equated to the calculated carbon number and the differences were very small. Because of this we concluded that the enzymic interesterification resulted in a random distribution of the fatty acids in the triglyceride molecule. In a randomized interesterified product it is possible to calculate the amount of C2-C12 and/ or C20-C24 bonded on a triglyceride molecule with L1 and/or L2.

The second method is an analytical method. Two parts of the sample (Band a and band b) with a certain amount of unsaturation were collected by using Silver-ion HPLC. Band A had about 6 till 9 unsaturations and Band B had 9 till 18 unsaturations. On the triglycerides of the two bands FAME and carbon number analyses were done. From these FAME analyses a carbon number was calculated by using the statistical programm. This carbon number was equated to the measured carbon number. From these analyses and calculations it was possible to calculate the minimum amount of C2-C12 and/or C20-C24 which was bonded on a triglyceride molecule with L1 and/or L2. The actual amount will be even higher because there was more sample than just the two analyzed bands.

Interesterification experiments were done on the following blends:

| 75/25 | wf(tuna)f / tributyrin |
|-------|------------------------|
| 75/25 | wf(tuna)f / tricaprin |
| 75/25 | wf (tuna) f / (BOO)s |
| 75/25 | wf(tuna)f / fhPO (= comparative example) |

The composition of tributyrin; tricaprin; (BOO)s and fhPO are given in table 2.

The experiments were done according to the method described above. The experiments were stopped after 96 hours. The carbon number and FAME of the blends and the interesterified blends were determined. The results of the FAME analyses are listed in table 4 and the results of the carbon number analyses are listed in table 5.

The results of the calculated amount of C2-C12 and/or C20-C24 which is bonded on a triglyceride molecule with L1 and/or L2 are listed in table 6, 7 and 8. The results of the analyzed amount of C2-C12 and/or C20-C24 which is bonded on a triglyceride molecule with L1 and/or L2 are listed in table 9.

EXAMPLE III

Interesterification experiments were done on the following blends:

A: 75/25    wf(tuna)f / tributyrin
B: 75/25    wf(tuna)f / tricaprin
C: 75/25    wf(tuna)f / (BOO)s
D: 75/25    wf(tuna)f / fhPO (comparative example)

The tributyrin, tricaprin, (BOO)s and fhPO are the same as in example II (see table 2).

The experiments were done according to the method described in example II. This tuna olein fraction was alumina treated to remove FFA, mono- and diglycerides, before lipase treatment. After 96 hours the experiments were stopped. The analyses of the reaction mixtures of tributyrin, tricaprin and (BOO)s were done. The results of all these analyses are listed in tables 10 and 11. Part of the reaction mixture was cleaned again by using an alumina column to remove the FFA, mono- and diglycerides and oxidised materials. This cleaned material was mixed in a ratio of 1/99 with a palm oil olein fraction with a bland smell. This was stored at ambient for three days and evaluated by the panel. The results from the panel using the different products obtained were as follows:
The panel was asked to make a ranking of the samples on fish smell.

| C | B | A | D |
|---|---|---|---|
| C | B | A | D |
| C | A | B | D |
| B | C | A | D |
| Least flavour --> Strongest flavour | | | |

Everyone in the panel agreed that the product from D was the worst and the others were far better. So the samples according to the invention (A, B and C) were all better than the comparative example (D).

The results of the calculated amount of C2-C12 and/or C20-C24 which is bonded on a triglyceride molecule with L1 and/or L2 are listed in table 12, 13 and 14. The results of the analyzed amount of C2-C12 and/or C20-C24 which is bonded on a triglyceride molecule with L1 and/or L2 are listed in table 15.

EXAMPLE IV

A fish oil concentrate was made according to the following procedure.

1. Chemical Hydrolysis of Tuna oil

Method adapted from Ratnayake et al (Fat Sci . Tech. 90 10 1988 page 381)

Tuna oil (200g) was refluxed for 1 hour in an atmosphere of nitrogen with a mixture of 47 g of potassium hydroxide pellets, 260 mls ethanol (96%), and 88 mls deionised water. The saponified mixture was diluted with 500 mls of water and the non-saponifiable matter was extracted with hexane (3 x 100ml). The aqueous layer was neutralised with 500mls of 1 M HCl . The free fatty acids were extracted into hexane (3x 100ml). The hexane was removed by evaporation.

2. Urea Fractionation of Tuna Acids

Method adapted from Robles Medina et al JAOCS vol 72 no 5 (1995)

The fatty acids (100g) were added with stirring to a hot (60°C) solution of 400g of Urea and 800 mls of ethanol. The mixture was stirred for 1 hour before the temperature was reduced by 1°C/ hour to 4°C at which temperature the mixture was held for 16 hours. The mixture was fractionated to remove the stearin fraction. The ethanol was removed from the olein fraction by evaporation. The olein was mixed with 250 mls of hexane and 250 mls of 1 M HCl. The hexane layer was isolated and the aqueous layer washed with a further 100 ml hexane. The hexane was removed by evaporation.

3. Recombination to triglyceride

batch 1

47 g of Tuna acids were mixed with approximately 4 g of glycerol and 4 g of *Rhizomucor miehei* in a jacketed vessel at 55°C with a magnetic stirrer. Nitrogen was allowed to blow over the surface to remove any water produced during the reaction. The reaction was allowed to continue for 10 days until the FFA had been substantially reduced. The product after removal of the enzyme by filtration was stirred at 60°C with 50 g of basic alumina in 100 mls of hexane. The alumina was removed by filtration.

batch 2

The free fatty acids were divided into 4 samples which were recombined to triglyceride on 12 to 15 g scale in glass vials at 55°C in a magnetic hot block. Typically 14 g of free fatty acid were mixed with 1.3 g glycerol and 0.7 g *Rhizomucor miehei.* Nitrogen was allowed to flow over the surface to remove water. The reactions were allowed to continue for 1 week. 50 g of product, after removal of the enzyme by filtration, was stirred at 60°C with 270 g of basic alumina in 100 mls of hexane. The alumina was removed by filtration.

The oil from "Recombination to triglycerides" batch 1 was called D58.

Interesterification experiments were done on the following blends:

| 75/25 | fish oil concentrate (= D58) / tricaprin |
| 75/25 | fish oil concentrate (= D58) / (BOO)s |

The interesterification experiments were done according to the method of example II.

The interesterification experiments of the fish oil concentrate and the tricaprin and (BOO)s were stopped after 115 hours. The FAME and carbon number analysis were done, the results are listed in table 16 and 17.

The results of the calculated amount C2-C12 and/or C20-C24 which is bonded on a triglyceride molecule with L1 and/or L2 of these samples are listed in table 18 and 19.

EXAMPLE V

The interesterification experiments were done according to the method of example II. This time the interesterification reactions were stopped after 46 hours.

The two following interesterified blends were used :

| 70 / 30 | wf(TUNA)f (= D40) / Tributyrin |
| 70 / 30 | wf(TUNA)f (= D40) / (BOO)s |

The FAME and carbon numbers of these interesterified mixtures are listed in table 20 and 21.

D40 being a tuna oil olein fraction, obtained by low temperature solvent fractionation, having about 38 wt % of DHA.

EXAMPLE VI

Blends were made of the two interesterified mixtures (= in(FISH)) and a complementary fat / fat blend for the following applications:

| Application | Reference | Blends inside the patent |
|---|---|---|
| **Chocolate** | Cocoa butter | Cocoa butter/in(FISH) 99/1 |
| **Bakery** | POf37/df(PO)f 40/60 | POf37/df(PO)f/in(FISH) 40/50/10 |
| **Ice cream coatings** | Coconut oil | CN/CNs/in(FISH) 90/5/5 |
| **Ice cream** | PO | PO/in(FISH) 90/10 |
| **Non dairy creams** | nPOm/df(PO)f 40/60 | nPOm/df(PO)f/in (FISH) 40/40/20 |
| **Health margarines / Health spreads** | HS1/SF 13/87 | HS1/SF/in(FISH) 13/77/10 |

(continued)

| Application | Reference | Blends inside the patent |
|---|---|---|
| **Confectionery fillings** | nPOm/df(PO)f 60/40 | nPOm/df(PO)f/in (FISH) 60/20/20 |
| **Mayonnaise / Sauces** | SF | SF/in(FISH) 90/10 |
| **Dressings** | SF | SF/in(FISH) 90/10 |

The range of N-values of the references and measured N-values for the blends are listed in table 22a and 22b.

EXAMPLE VII

Range style dressings were made according to the following recipe:

|  | wt% |
|---|---|
| Liquid oil | 25.0 |
| Maltodextrin | 20.0 |
| Dried egg yolk | 0.8 |
| Xanthum gum | 0.4 |
| Vinegar | 5.0 |
| Water | 44.8 |

In above recipe three different liquid oils were applied. The liquid oil for the reference was Sunflower oil and the liquid oils according to the invention were as follows:

- Sunflower oil / in(D40/tributyrin) 90/10
- Sunflower oil / in(D40/(BOO)s) 90/10

The FAME results of the in(D40/tributyrin) and the in (D40/(BOO)s) are listed in table 20. Results of the NMR measurements of the two blends according to the invention are listed in table 22b.
A large batch of aqueous phase was manufactured and used for all the dressings. The water and maltodextrin were first blended using a Silverson mixer. The egg yolk, xanthum gum and vinegar were sequentially added whilst continuing to stir with the Silverson until complete mixing had occurred. At this stage the pH = 3.25, therefore no further adjustment to the pH was made.
The oils were slowly added to the aqueous phase whilst mixing using the Silverson. Mixing was continued until all the oil had been dispersed. The dressings were transferred to 200 ml plastic sterile bottles.
The viscosities of the samples were determined using a Brookfield Viscometer fitted with a number 4 spindle rotating at 10 rpm. The samples were contained in identical 200 ml plastic bottles hence the viscosities are directly comparable with each other. For each sample the avarage of three measurements was taken with the sample being allowed to relax for 1 minute between each 1 minute of shear. The viscosity results of the dressings are listed in table 23.
The oil droplet size distribution was determined using a Malvern Mastersizer using a 45 mm filter. The results of these measurements, as Sauter-mean particle diameter are listed in table 23.

EXAMPLE VIII

Spreads were made according to the following recipe:

| Fat Phase | |
|---|---|
| Fat Blend | 40 % |
| Hymono 7804 | 0.3 % |
| Colour (2% β-carotene) | 0.02 % |
| Total | 40.32 % |

| Aqueous Phase (to pH 5.1) | |
|---|---|
| Water | 56.44 % |
| Skimmed Milk Powder | 1.5 % |
| Gelatin (270 bloom) | 1.5 % |
| Potassium Sorbate | 0.15 % |
| Citric Acid Powder | 0.07 % |
| Total | 59.66 % |

In above recipe three different fat blends were applied. The fat blend for the reference was HS1 / Sunflower oil 13/87 and the fat blends according to the invention were as follows:

- HS1 / Sunflower oil / in(D40/tributyrin) 13/77/10
- HS1 / Sunflower oil / in(D40/(BOO)s) 13/77/10

The FAME results of the in(D40/tributyrin) and the in(D40/(BOO)s) are listed in table 20. Results of the NMR measurements of the two blends according to the invention are listed in table 22a.

The spreads were processed according to the following procedure: 2 kg of material was prepared and processed.

A micro-votator processing line was set up as follows:

| Premix conditions | Stirrer Speed 60 rpm |
|---|---|
| | Temperature 50°C |
| pump | Proportioning pump set at 60% (30 g/min.). |
| $A_1$ conditions | Shaft speed 1000 rpm |
| | Temperature set at 8°C |
| $C_1$ conditions | Shaft speed 1000 rpm |
| | Temperature set to 10°C |
| $A_2$ conditions | Shaft Speed 1000 rpm |
| | Temperature set to 10°C |
| $C_2$ conditions | Shaft speed 1000 rpm |
| | Temperature set to 13°C |

The aqueous phase was prepared by heating the required amount of water to approximately 80°C and then, using a silverson mixer, slowly mixing in the ingredients. The pH of the system was adjusted to 5.1 by adding 20% Lactic acid solution as required.

A premix was prepared by stirring the fat phase in the premix tank and then slowly adding in the aqueous phase. When addition was complete, the mix was stirred for a further 5 minutes before pumping through the line. When the process had stabilised (around 20 minutes), product was collected for storage and evaluation.

The typical process conditions were as follows:

| Sample | $A_{1\,Exit}$ (°C) | $C_{1\,Exit}$ (°C) | $A_{2\,Exit}$ (°C) | $C_{2\,Exit}$ (°C) | Line Pressure (bar) |
|---|---|---|---|---|---|
| Reference | 13.2 | 18.7 | 13.6 | 15.6 | 0.5 to 2 |
| HS1/SF/in(D40/tributyrin) 13/77/10 | 13.2 | 19.5 | 13.8 | 15.6 | 1 to 3.4 |
| HS1/SF/in(D40/(BOO)s) 13/77/10 | 12.3 | 19.1 | 13.8 | 15.5 | 1.2 to 3.5 |

For all three systems, very good oil continuous low fat spreads were produced using this system.

Evaluations were done on C-value and on conductivity. The C-value in g/cm$^2$ of the spreads was measured by using a cone penetrometer. The conductivity in µ siemens/cm was measured by using a Wayne Kerr.

|  | 20°C | |
|---|---|---|
| Sample | C-value | Conductivity |
| Reference | 190 | $10^{-5}$ |
| HS1/SF/in(D40/tributyrin) | 180 | $10^{-5}$ |
| HS1/SF/in(D40/(BOO)s) | 180 | $10^{-5}$ |

All samples spread very easily on grease-proof paper, with no obvious signs of water loss.

EXAMPLE IX

Ice cream was made according to the following recipe:

|  | wt% |
|---|---|
| Fat blend | 10.0 |
| Skimmed milk powder | 10.0 |
| Icing sugar | 12.0 |
| Corn syrup solids | 4.0 |
| Dextrose monohydrate | 2.0 |
| Sherex IC 9330® | 0.6 |
| Water | 61.4 |
| Total | 100.0 |

Sherex IC 9330® is a product from Quest International and comprises mono- and diglycerides admixed with different stabilizers.

In above recipe three different fat blends were applied. The fat blend for the reference was PO / Sunflower oil 90/10 and the fat blends according to the invention were as follows:

- PO / in(D40/tributyrin) 90/10
- PO / in(D40/(BOO)s) 90/10

The FAME results of the in(D40/tributyrin) and the in(D40/(BOO)s) are listed in table 20. Results of the NMR measurements of the two blends according to the invention are listed in table 22a.

All ingredients except the water and the fat were mixed. Then the cold water was added to this mixture. This mixture was heated in a water bath till a temperature of 70°C. Then the fully liquid palm oil was added to the mixture while "stirred" in the ultra-turrax. This emulsion was cooled in a water bath at 20°C untill a temperature of 30°C was reached. The emulsion was stirred in the ultra-turrax again. The batch ice cream machine was held for 24 hours at -28°C prior to use. The emulsion was placed in the batch ice cream machine and stirred for 15 minutes. The resulting ice cream was stored at -20°C for 24 hours and then evaluated.

The viscosity of the ice cream emulsion, prior to freezing was measured. The overrun and hardness were determined. The viscosity was measured by using the Haake viscometer. Hardness was measured by using a Stevens texture analyser with a 45° cone at a speed of 0.5 mm/second till a deepness of 2 mm.

| Sample | Overrun (%) | Hardness (gram) |
|---|---|---|
| Reference | 31.5 | 142 |
| PO / in(D40 /tributyrin) | 31.5 | 148 |
| PO / in(D40 /(BOO)s) | 36.7 | 185 |

The viscosities of the emulsions were similar.

Table 2

| FAME data for the components used | | | | | | |
|---|---|---|---|---|---|---|
| FAME | Semi refined tuna oil | wf(TUNA) f | Tributyrin | Tricaprin | (BOO)s | fhPO |
| C4:0 | 0.0 | 0.0 | 99.0 | 0.0 | 0.0 | 0.0 |
| C10:0 | 0.0 | 0.0 | 0.0 | 99.7 | 0.0 | 0.0 |
| C12:0 | 0.1 | 0.0 | 0.0 | 0.3 | 0.0 | 0.3 |
| C12:othe | 0.0 | 0.0 | 0.0 | 0.0 | 0.0 | 0.0 |
| C14:0 | 3.5 | 1.7 | 0.0 | 0.0 | 0.1 | 1.0 |
| C14:othe | 1.6 | 0.3 | 0.0 | 0.0 | 0.0 | 0.0 |
| C16:0 | 20.8 | 3.1 | 0.0 | 0.0 | 1.9 | 41.7 |
| C16:1 | 5.4 | 7.6 | 0.0 | 0.0 | 0.0 | 0.0 |
| C16:othe | 4.7 | 3.2 | 0.0 | 0.0 | 0.0 | 0.0 |
| C18:0 | 6.1 | 0.6 | 0.0 | 0.0 | 3.1 | 54.6 |
| C18:1 | 14.8 | 16.1 | 0.0 | 0.0 | 29.0 | 1.5 |
| C18:2 | 1.2 | 3.1 | 0.0 | 0.0 | 2.3 | 0.2 |
| C18:3 | 0.7 | 0.9 | 0.0 | 0.0 | 0.0 | 0.0 |
| C18:othe | 1.9 | 1.7 | 0.0 | 0.0 | 0.0 | 0.0 |
| C20:0 | 0.4 | 0.0 | 0.0 | 0.0 | 3.4 | 0.5 |
| C20:1 | 1.1 | 1.1 | 0.0 | 0.0 | 0.1 | 0.0 |
| C20:2 | 0.0 | 0.2 | 0.0 | 0.0 | 0.0 | 0.0 |
| C20:3 | 0.0 | 0.0 | 0.0 | 0.0 | 0.0 | 0.0 |
| C20:4 | 0.0 | 0.0 | 0.0 | 0.0 | 0.0 | 0.0 |
| C20:5 | 5.1 | 12.0 | 0.0 | 0.0 | 0.0 | 0.0 |
| C20:othe | 3.1 | 4.0 | 0.0 | 0.0 | 0.0 | 0.0 |
| C22:0 | 0.0 | 0.0 | 0.0 | 0.0 | 58.5 | 0.1 |
| C22:1 | 0.3 | 0.0 | 0.0 | 0.0 | 0.1 | 0.0 |
| C22:5 | 1.5 | 2.1 | 0.0 | 0.0 | 0.0 | 0.0 |
| C22:6 | 24.8 | 39.6 | 0.0 | 0.0 | 0.0 | 0.0 |
| C22:othe | 2.9 | 2.8 | 0.0 | 0.0 | 0.0 | 0.0 |
| C24:0 | 0.0 | 0.0 | 0.0 | 0.0 | 1.5 | 0.1 |
| Others | 0.0 | 0.0 | 1.0 | 0.0 | 0.0 | 0.0 |
| Total | 100.0 | 100.0 | 100.0 | 100.0 | 100.0 | 100.0 |

Table 3

| Programm check on chemical interesterification. | | | |
|---|---|---|---|
| | wfPOs/PKs (blend) | in(wfPOs/PKs) | Calculated by statistica l programm |
| FAME | | | |
| C8:0 (%) | 0.6 | 0.6 | |
| C10:0 (%) | 1.1 | 1.1 | |

Table 3   (continued)

| Programm check on chemical interesterification. | | | |
|---|---|---|---|
| FAME | wfPOs/PKs (blend) | in(wfPOs/PKs) | Calculated by statistica l programm |
| C12:0 (%) | 22.5 | 22.5 | |
| C14:0 (%) | 10.0 | 9.9 | |
| C16:0 (%) | 50.2 | 50.5 | |
| C17:0 (%) | 0.1 | 0.1 | |
| C18:0 (%) | 40.3 | 4.3 | |
| C18:1 (%) | 9.9 | 10.0 | |
| C18:2 (%) | 0.6 | 0.7 | |
| C20:0 (%) | 0.3 | 0.3 | |
| C22:0 (%) | 0.1 | 0.0 | |
| Carbon number | | | |
| C28 | 0.1 | 0.0 | 0.0 |
| C30 | 0.2 | 0.0 | 0.0 |
| C32 | 1.4 | 0.4 | 0.2 |
| C34 | 2.7 | 0.7 | 0.4 |
| C36 | 11.5 | 3.3 | 2.5 |
| C38 | 10.4 | 4.2 | 3.4 |
| C40 | 6.4 | 12.7 | 11.4 |
| C42 | 4.1 | 12.3 | 11.7 |
| C44 | 2.4 | 21.9 | 22.1 |
| C46 | 3.7 | 17.0 | 17.8 |
| C48 | 30.5 | 15.5 | 17.0 |
| C50 | 21.7 | 9.0 | 10.2 |
| C52 | 3.8 | 2.5 | 2.9 |
| C54 | 1.1 | 0.4 | 0.3 |
| C56 | 0.1 | 0.1 | 0.0 |
| C58 | 0.1 | 0.0 | 0.0 |

Table 4 FAME results

| FAME | TUNAf / butyrin (blend) | in (TUNAf /butyrin) | TUNAf / caprin (blend) | in (TUNAf /caprin) | TUNAf / BOOs (blend) | in (TUNAf / BOOs) | TUNAf / fhPO (blend) | in (TUNAf / fhPO) |
|---|---|---|---|---|---|---|---|---|
| C4:0 | 30.3 | 36.7 | 0.0 | 0.0 | 0.0 | 0.0 | 0.0 | 0.0 |
| C10:0 | 0.0 | 0.0 | 37.0 | 34.5 | 0.0 | 0.0 | 0.0 | 0.0 |
| C12:0 | 0.1 | 0.0 | 0.1 | 0.1 | 0.1 | 0.1 | 0.0 | 0.0 |
| C12:othe | 0.1 | 0.0 | 0.1 | 0.1 | 0.1 | 0.1 | 0.0 | 0.0 |
| C14:0 | 1.6 | 1.6 | 1.3 | 1.4 | 1.4 | 1.4 | 1.8 | 1.8 |
| C14:othe | 0.6 | 0.6 | 0.4 | 0.6 | 0.6 | 0.5 | 0.5 | 0.5 |
| C16:0 | 4.8 | 4.9 | 4.1 | 4.4 | 5.0 | 5.0 | 19.5 | 18.6 |
| C16:1 | 5.1 | 5.2 | 4.5 | 4.6 | 4.4 | 4.5 | 4.5 | 4.7 |
| C16:othe | 2.7 | 2.8 | 2.4 | 2.6 | 2.4 | 2.5 | 2.4 | 2.5 |
| C18:0 | 0.7 | 0.8 | 0.6 | 0.7 | 1.8 | 1.8 | 20.6 | 19.9 |
| C18:1 | 11.4 | 11.7 | 10.1 | 10.5 | 21.2 | 21.0 | 10.5 | 10.9 |
| C18:2 | 1.2 | 1.2 | 1.1 | 1.1 | 2.0 | 2.0 | 2.0 | 1.8 |
| C18:3 | 0.7 | 0.6 | 0.6 | 0.7 | 0.6 | 0.6 | 0.5 | 0.6 |
| C18:othe | 1.8 | 1.5 | 1.6 | 2.0 | 1.6 | 1.6 | 0.9 | 0.9 |
| C20:0 | 0.0 | 0.0 | 0.0 | 0.0 | 1.2 | 1.2 | 0.2 | 0.2 |
| C20:1 | 0.8 | 0.8 | 0.7 | 0.8 | 0.7 | 0.8 | 0.8 | 1.0 |
| C20:2 | 0.3 | 0.2 | 0.2 | 0.3 | 0.2 | 0.2 | 0.3 | 0.2 |
| C20:3 | 0.2 | 0.2 | 0.2 | 0.3 | 0.3 | 0.2 | 0.2 | 0.1 |

| FAME | TUNAf / butyrin (blend) | in (TUNAf /butyrin) | TUNAf / caprin (blend) | in (TUNAf /caprin) | TUNAf / BOOs (blend) | in (TUNAf / BOOs) | TUNAf / fhPO (blend) | in (TUNAf / fhPO) |
|---|---|---|---|---|---|---|---|---|
|  | 1.7 | 1.5 | 1.6 | 1.7 | 1.6 | 1.6 | 1.6 | 1.7 |
| C20:5 | 7.0 | 5.8 | 6.4 | 6.2 | 6.3 | 6.2 | 6.5 | 6.4 |
| C20:oth | 0.7 | 0.5 | 0.6 | 0.7 | 0.6 | 0.6 | 0.7 | 0.7 |
| C22:0 | 0.0 | 0.0 | 0.0 | 0.0 | 21.8 | 21.3 | 0.1 | 0.1 |
| C22:1 | 0.3 | 0.3 | 0.3 | 0.3 | 0.0 | 0.0 | 0.3 | 0.3 |
| C22:5 | 1.2 | 1.1 | 1.2 | 1.2 | 1.2 | 1.2 | 1.3 | 1.3 |
| C22:6 | 25.1 | 20.3 | 23.2 | 23.2 | 23.0 | 23.6 | 23.1 | 23.7 |
| C22:othe | 1.9 | 1.8 | 1.5 | 2.2 | 1.8 | 1.9 | 1.9 | 2.1 |
| C24:0 | 0.0 | 0.0 | 0.0 | 0.0 | 0.4 | 0.4 | 0.0 | 0.0 |
| Total | 100.3 | 100.1 | 99.8 | 100.2 | 100.3 | 100.3 | 100.2 | 100.0 |

EP 0 739 589 B1

Table 5

| Carbon number results | | | | | | | |
|---|---|---|---|---|---|---|---|
| Carbon number | TUNAf/ butyrin (blend) | in(TUNAf/ butyrin) | TUNAf/ caprin (blend) | in(TUNAf/ caprin) | TUNAf/ BOOs (blend) | in(TUNAf/ BOOs) | TUNAf/ fhPO (blend) | in (TUNAf/ fhPO) |
| C12 | 19.9 | 11.0 | 0.0 | 0.0 | 0.0 | 0.0 | 0.0 | 0.0 |
| C20 | 0.0 | 0.1 | 0.0 | 0.0 | 0.0 | 0.0 | 0.0 | 0.0 |
| C22 | 0.0 | 2.7 | 0.0 | 0.0 | 0.0 | 0.0 | 0.0 | 0.0 |
| C24 | 0.0 | 12.7 | 0.0 | 0.0 | 0.0 | 0.0 | 0.0 | 0.0 |
| C26 | 0.0 | 11.2 | 0.0 | 0.0 | 0.0 | 0.0 | 0.0 | 0.0 |
| C28 | 0.0 | 6.7 | 0.0 | 0.0 | 0.0 | 0.0 | 0.0 | 0.0 |
| C30 | 0.0 | 6.0 | 37.6 | 9.5 | 0.0 | 0.0 | 0.0 | 0.0 |
| C32 | 0.0 | 0.2 | 0.2 | 0.1 | 0.0 | 0.0 | 0.0 | 0.0 |
| C34 | 0.2 | 0.7 | 0.1 | 1.2 | 0.0 | 0.0 | 0.0 | 0.0 |
| C36 | 0.4 | 2.2 | 0.1 | 6.9 | 0.2 | 0.0 | 0.0 | 0.0 |
| C38 | 0.7 | 3.8 | 0.3 | 8.5 | 0.4 | 0.1 | 0.0 | 0.0 |
| C40 | 1.2 | 5.6 | 0.5 | 5.8 | 0.7 | 0.2 | 0.0 | 0.0 |
| C42 | 1.4 | 7.1 | 0.7 | 11.0 | 1.1 | 0.5 | 0.0 | 0.0 |
| C44 | 1.2 | 6.3 | 0.7 | 5.0 | 0.9 | 0.7 | 0.0 | 0.2 |
| C46 | 1.4 | 4.7 | 0.9 | 6.4 | 0.7 | 0.6 | 0.2 | 0.6 |
| C48 | 1.9 | 6.7 | 1.4 | 9.1 | 1.9 | 2.0 | 3.2 | 2.9 |
| C50 | 4.0 | 1.6 | 3.1 | 8.5 | 3.7 | 3.7 | 14.9 | 10.2 |
| C52 | 6.9 | 1.4 | 5.3 | 6.2 | 5.5 | 6.8 | 18.6 | 16.2 |
| C54 | 11.0 | 1.9 | 8.7 | 9.5 | 9.3 | 10.9 | 13.5 | 18.7 |
| C56 | 14.0 | 2.3 | 11.2 | 3.5 | 12.8 | 15.2 | 11.6 | 16.6 |
| C58 | 14.5 | 2.2 | 11.1 | 3.2 | 19.1 | 17.7 | 12.4 | 14.3 |
| C60 | 12.5 | 1.9 | 10.3 | 3.1 | 15.5 | 16.0 | 13.4 | 10.1 |
| C62 | 7.1 | 1.0 | 6.2 | 1.9 | 25.2 | 15.7 | 12.1 | 10.2 |
| C64 | 1.7 | 0.0 | 1.6 | 0.6 | 2.1 | 4.7 | 0.0 | 0.0 |
| C66 | 0.0 | 0.0 | 0.0 | 0.0 | 0.9 | 4.7 | 0.0 | 0.0 |
| C68 | 0.0 | 0.0 | 0.0 | 0.0 | 0.0 | 0.5 | 0.0 | 0.0 |
| Total | 100.0 | 100.0 | 100.0 | 100.0 | 100.0 | 100.0 | 99.9 | 100.0 |

**Table 6**  Calculated results of example II of the amount of
C4:0 which is bonded on a triglyceride molecule
with L1 and/or L2.


75/25      wf(tuna)f / tributyrin

| Carbon number | Analyzed (wt%) | Calculated (wt%) | %Bu+x+L1/L2 (wt%) | %Bu+Bu+L1/L2 (wt%) | Bu wt% | wt% of the total added amount Bu bonded on a molecule with L1 and / or L2 |
|---|---|---|---|---|---|---|
| C12 | 11.0 | 14.7 | 0.0 | 0.0 | 0.0 | 0.0 |
| C20 | 0.1 | 0.0 | 0.0 | 0.0 | 0.0 | 0.0 |
| C22 | 2.7 | 1.6 | 0.0 | 0.0 | 0.0 | 0.0 |
| C24 | 12.7 | 9.1 | 0.0 | 0.0 | 0.0 | 0.0 |
| C26 | 11.2 | 10.7 | 0.0 | 0.0 | 0.0 | 0.0 |
| C28 | 6.7 | 5.9 | 0.0 | 3.9 | 1.1 | 3.0 |
| C30 | 6.0 | 15.1 | 0.0 | 13.0 | 3.5 | 9.4 |
| C32 | 0.2 | 0.1 | 0.0 | 0.0 | 0.0 | 0.0 |
| C34 | 0.7 | 0.6 | 0.0 | 0.0 | 0.0 | 0.0 |
| C36 | 2.2 | 2.3 | 0.0 | 0.0 | 0.0 | 0.0 |
| C38 | 3.8 | 4.2 | 0.0 | 0.0 | 0.0 | 0.0 |
| C40 | 5.6 | 5.3 | 2.4 | 0.0 | 0.2 | 0.7 |
| C42 | 7.1 | 7.7 | 5.7 | 0.0 | 0.5 | 1.5 |
| C44 | 6.3 | 6.7 | 5.4 | 0.0 | 0.5 | 1.3 |
| C46 | 4.7 | 3.4 | 2.7 | 0.0 | 0.2 | 0.6 |
| C48 | 6.7 | 4.4 | 4.0 | 0.0 | 0.3 | 0.9 |
| C50 | 1.6 | 0.5 | 0.0 | 0.0 | 0.0 | 0.0 |
| C52 | 1.4 | 0.8 | 0.0 | 0.0 | 0.0 | 0.0 |
| C54 | 1.9 | 1.2 | 0.0 | 0.0 | 0.0 | 0.0 |
| C56 | 2.3 | 1.4 | 0.0 | 0.0 | 0.0 | 0.0 |
| C58 | 2.2 | 1.4 | 0.0 | 0.0 | 0.0 | 0.0 |
| C60 | 1.9 | 1.3 | 0.0 | 0.0 | 0.0 | 0.0 |
| C62 | 1.0 | 0.9 | 0.0 | 0.0 | 0.0 | 0.0 |
| C64 | 0.0 | 0.4 | 0.0 | 0.0 | 0.0 | 0.0 |
| C66 | 0.0 | 0.3 | 0.0 | 0.0 | 0.0 | 0.0 |
| Total | 100.0 | 100.0 | | | 6.4 | 17.5 |

x = all fatty acids except Bu (C4:0)

/ = or

**Table 7** Calculated results of example II of the amount of C10:0 which is bonded on a triglyceride molecule with L1 and/or L2.

75/25 wf(tuna)f / tricaprin

| Carbon number | Analyzed (wt%) | Calculated (wt%) | Ca+x+L1/L2 (wt%) | Ca+Ca+L1/L2 (wt%) | Ca wt% | wt% of the total added amount Ca bonded on a molecule with L1 and / or L2 |
|---|---|---|---|---|---|---|
| C30 | 9.5 | 7.5 | 0.0 | 0.0 | 0.0 | 0.0 |
| C32 | 0.1 | 0.1 | 0.0 | 0.0 | 0.0 | 0.0 |
| C34 | 1.2 | 1.1 | 0.0 | 0.0 | 0.0 | 0.0 |
| C36 | 6.9 | 6.0 | 0.0 | 0.0 | 0.0 | 0.0 |
| C38 | 8.5 | 7.4 | 0.0 | 0.0 | 0.0 | 0.0 |
| C40 | 5.8 | 5.3 | 0.0 | 2.9 | 1.5 | 4.2 |
| C42 | 11.0 | 14.5 | 0.0 | 10.5 | 5.0 | 14.5 |
| C44 | 5.0 | 4.4 | 0.3 | 0.0 | 0.1 | 0.2 |
| C46 | 6.4 | 6.1 | 2.4 | 0.0 | 0.5 | 1.5 |
| C48 | 9.1 | 9.7 | 6.9 | 0.0 | 1.4 | 4.2 |
| C50 | 8.5 | 9.4 | 7.2 | 0.0 | 1.4 | 4.2 |
| C52 | 6.2 | 6.3 | 4.2 | 0.0 | 0.8 | 2.3 |
| C54 | 9.5 | 8.5 | 6.2 | 0.0 | 1.1 | 3.3 |
| C56 | 3.5 | 2.9 | 0.0 | 0.0 | 0.0 | 0.0 |
| C58 | 3.2 | 3.0 | 0.0 | 0.0 | 0.0 | 0.0 |
| C60 | 3.1 | 3.2 | 0.0 | 0.0 | 0.0 | 0.0 |
| C62 | 1.9 | 2.4 | 0.0 | 0.0 | 0.0 | 0.0 |
| C64 | 0.6 | 1.2 | 0.0 | 0.0 | 0.0 | 0.0 |
| C66 | 0.0 | 1.0 | 0.0 | 0.0 | 0.0 | 0.0 |
| Total | 100.0 | 100.0 | | | 11.9 | 34.4 |

x = All fatty acids except Ca (C10:0)

/ = or

**Table 8**    Calculated results of example II of the amount of C22:0 which is bonded on a triglyceride molecule with L1 and/or L2.

75/25     wf(tuna)f / (BOO)s

| Carbon number | Analyzed (wt%) | Calculated (wt%) | Be+x+L1/L2 (wt%) | Be+Be+L1/L2 (wt%) | Be wt% | wt% of the total added amount Be bonded on a molecule with L1 and / or L2 |
|---|---|---|---|---|---|---|
| C38 | 0.1 | 0.0 | 0.0 | 0.0 | 0.0 | 0.0 |
| C40 | 0.2 | 0.0 | 0.0 | 0.0 | 0.0 | 0.0 |
| C42 | 0.5 | 0.0 | 0.0 | 0.0 | 0.0 | 0.0 |
| C44 | 0.7 | 0.0 | 0.0 | 0.0 | 0.0 | 0.0 |
| C46 | 0.6 | 0.2 | 0.0 | 0.0 | 0.0 | 0.0 |
| C48 | 2.0 | 0.8 | 0.0 | 0.0 | 0.0 | 0.0 |
| C50 | 3.7 | 2.4 | 0.0 | 0.0 | 0.0 | 0.0 |
| C52 | 6.8 | 5.1 | 0.0 | 0.0 | 0.0 | 0.0 |
| C54 | 10.9 | 8.9 | 0.0 | 0.0 | 0.0 | 0.0 |
| C56 | 15.2 | 14.0 | 0.0 | 0.0 | 0.0 | 0.0 |
| C58 | 17.7 | 17.0 | 1.5 | 0.0 | 0.6 | 2.7 |
| C60 | 16.0 | 16.5 | 5.1 | 0.0 | 1.9 | 8.8 |
| C62 | 15.7 | 18.8 | 7.8 | 0.0 | 2.8 | 13.0 |
| C64 | 4.7 | 6.8 | 2.4 | 0.7 | 1.3 | 6.1 |
| C66 | 4.7 | 9.2 | 3.9 | 2.6 | 3.0 | 14.2 |
| C68 | 0.5 | 0.0 | 0.0 | 0.0 | 0.0 | 0.0 |
| Total | 100.0 | 99.7 | 0.0 | 0.0 | 9.5 | 44.8 |

x = All fatty acids except Be (C22:0)

/ = or

Table 9

| | | | | | | | |
|---|---|---|---|---|---|---|---|
| Analyzed results of example II of the amount of C2-C12 and or C20-C24 which is bonded on a triglyceride molecule with L1 and/or L2. | | | | | | | |
| | HPLC band | Band as % TAGs (g/ 100g) | Sum of Cno's containing target TAG in band (%wt) | Sum of target acids in band (%wt) | Target acids in target TAGs in band (g/ 100g) | Target acids in total FAME on TG (%wt) | Therefore target acids in target TAGs(%wt on total FAME) |
| in(TUNAf /Butyrin) | A | 21.9 | 79.8 | 20.2 | 3.5 | 36.7 | 9.6 |
| | B | 19.5 | 62.8 | 5.9 | 0.7 | 36.7 | 2.0 |
| | | | | | | Total: | 11.6 |
| in(TUNAf/ Caprin) | A | 28.3 | 92.0 | 28.9 | 7.5 | 34.5 | 21.8 |
| | B | 26.5 | 56.6 | 21.1 | 1.8 | 34.5 | 5.3 |
| | | | | | | Total: | 27.1 |
| in(TUNAf/ BOOs) | A | 34.2 | 15.3 | 21.5 | 1.1 | 21.3 | 4.9 |
| | B | 32.0 | 10.0 | 8.4 | 0.3 | 21.3 | 1.2 |
| | | | | | | Total: | 6.1 |

Table 10

| FAME | TUNAf/ butyrin (blend) | in(TUNAf/ butyrin ) | TUNAf/ caprin (blend) | in(TUNAf/ caprin) | TUNAf/ BOOs (blend) | in(TUNAf/ BOOs) | in(TUNA f/ fhPO) |
|---|---|---|---|---|---|---|---|
| C4:0 | 27.6 | 28.3 | 0.0 | 0.0 | 0.0 | 0.0 | 0.0 |
| C10:0 | 0.0 | 0.0 | 29.7 | 28.5 | 0.0 | 0.0 | 0.0 |
| C12:0 | 0.0 | 0.0 | 0.1 | 0.1 | 0.1 | 0.1 | 0.1 |
| C12:other | 0.4 | 0.3 | 0.1 | 0.1 | 0.1 | 0.1 | 0.1 |
| C14:0 | 1.5 | 1.5 | 1.4 | 1.4 | 1.4 | 1.5 | 1.8 |
| C14:other | 0.5 | 0.4 | 0.5 | 0.5 | 0.5 | 0.5 | 0.6 |
| C16:0 | 2.7 | 2.7 | 2.5 | 2.5 | 3.1 | 3.2 | 14.8 |
| C16:1 | 5.2 | 5.2 | 5.1 | 5.0 | 5.0 | 5.1 | 5.2 |
| C16:other | 2.5 | 2.7 | 2.3 | 2.5 | 2.5 | 2.5 | 2.6 |
| C18:0 | 0.3 | 0.4 | 0.3 | 0.3 | 1.2 | 1.2 | 17.3 |
| C18:1 | 11.4 | 11.4 | 11.1 | 11.0 | 19.9 | 20.5 | 12.1 |
| C18:2 | 1.3 | 1.3 | 1.3 | 1.3 | 2.0 | 2.0 | 1.4 |
| C18:3 | 0.7 | 0.7 | 0.7 | 0.7 | 0.7 | 0.7 | 0.7 |
| C18:other | 2.1 | 2.0 | 1.9 | 2.0 | 1.9 | 1.9 | 1.8 |
| C20:0 | 0.0 | 0.0 | 0.0 | 0.0 | 0.9 | 0.9 | 0.2 |
| C20:1 | 0.7 | 0.7 | 0.7 | 0.7 | 0.8 | 0.8 | 0.8 |
| C20:2 | 0.2 | 0.2 | 0.2 | 0.2 | 0.2 | 0.2 | 0.2 |
| C20:3 | 0.2 | 0.2 | 0.2 | 0.2 | 0.3 | 0.3 | 0.2 |

Table 10 (continued)

| FAME results example III | | | | | | |
|---|---|---|---|---|---|---|
| FAME | TUNAf/ butyrin (blend) | in(TUNAf/ butyrin ) | TUNAf/ caprin (blend) | in(TUNAf/ caprin) | TUNAf/ BOOs (blend) | in(TUNAf/ BOOs) | in(TUNA f/ fhPO) |
| C20:4 | 1.8 | 1.8 | 1.8 | 1.8 | 1.8 | 1.7 | 1.7 |
| C20:5 | 8.2 | 7.9 | 8.0 | 8.0 | 8.1 | 7.6 | 7.5 |
| C20:other | 0.9 | 0.9 | 0.9 | 0.9 | 0.9 | 0.9 | 0.7 |
| C22:0 | 0.0 | 0.0 | 0.0 | 0.0 | 16.4 | 17.5 | 0.0 |
| C22:1 | 0.2 | 0.2 | 0.2 | 0.3 | 0.0 | 0.0 | 0.3 |
| C22:5 | 1.4 | 1.3 | 1.3 | 1.3 | 1.5 | 1.4 | 1.3 |
| C22:6 | 28.1 | 28.3 | 27.6 | 28.9 | 28.5 | 27.4 | 26.6 |
| C22:other | 1.9 | 1.9 | 1.9 | 1.9 | 1.9 | 1.9 | 1.8 |
| C24:0 | 0.0 | 0.0 | 0.0 | 0.0 | 0.3 | 0.3 | 0.0 |
| Total | 99.8 | 100.3 | 99.8 | 100.1 | 100.0 | 100.2 | 99.8 |

Table 11

| Carbon number results example III | | | | | | |
|---|---|---|---|---|---|---|
| Carbon number | TUNAf/ butyrin (blend) | in(TUNAf/ butyrin) | TUNAf/ caprin (blend) | in(TUNAf/ caprin) | TUNAf/ BOOs (blend) | in(TUNAf/ BOOs) | in(TUNA f/ fhPO) |
| C12 | 16.6 | 6.7 | 0.0 | 0.0 | 0.0 | 0.0 | 0.0 |
| C20 | 0.0 | 0.1 | 0.0 | 0.0 | 0.0 | 0.0 | 0.0 |
| C22 | 0.0 | 1.4 | 0.0 | 0.0 | 0.0 | 0.0 | 0.0 |
| C24 | 0.0 | 6.3 | 0.0 | 0.0 | 0.0 | 0.0 | 0.0 |
| C26 | 0.0 | 9.4 | 0.0 | 0.0 | 0.0 | 0.0 | 0.0 |
| C28 | 0.0 | 6.1 | 0.0 | 0.0 | 0.0 | 0.0 | 0.0 |
| C30 | 0.0 | 7.3 | 30.0 | 4.7 | 0.0 | 0.0 | 0.0 |
| C32 | 0.0 | 0.2 | 0.2 | 0.1 | 0.0 | 0.0 | 0.0 |
| C34 | 0.0 | 0.4 | 0.1 | 0.9 | 0.0 | 0.0 | 0.0 |
| C36 | 0.0 | 1.7 | 0.2 | 4.2 | 0.0 | 0.0 | 0.1 |
| C38 | 0.1 | 3.5 | 0.0 | 6.1 | 0.0 | 0.0 | 0.1 |
| C40 | 0.2 | 5.9 | 0.0 | 5.0 | 0.2 | 0.1 | 0.2 |
| C42 | 0.3 | 8.0 | 0.0 | 9.3 | 0.4 | 0.4 | 0.4 |
| C44 | 0.4 | 8.1 | 0.1 | 4.3 | 0.4 | 0.5 | 0.6 |
| C46 | 0.9 | 6.2 | 0.3 | 6.2 | 0.7 | 0.8 | 1.3 |
| C48 | 1.1 | 11.0 | 0.6 | 9.3 | 1.0 | 1.6 | 3.9 |
| C50 | 3.1 | 0.9 | 2.3 | 9.7 | 2.9 | 3.6 | 9.7 |
| C52 | 5.8 | 1.2 | 4.7 | 7.6 | 5.3 | 7.2 | 14.9 |
| C54 | 10.1 | 2.1 | 8.3 | 11.5 | 9.0 | 11.5 | 17.7 |
| C56 | 14.3 | 3.0 | 12.4 | 4.9 | 13.6 | 16.4 | 17.5 |

Table 11   (continued)

| Carbon number | TUNAf/ butyrin (blend) | in(TUNAf/ butyrin) | TUNAf/ caprin (blend) | in(TUNAf/ caprin) | TUNAf/ BOOs (blend) | in(TUNAf/ BOOs) | in(TUNA f/ fhPO) |
|---|---|---|---|---|---|---|---|
| | | | Carbon number results example III | | | | |
| C58 | 16.5 | 3.6 | 14.4 | 4.9 | 20.5 | 19.4 | 13.1 |
| C60 | 14.9 | 3.6 | 13.8 | 5.2 | 16.1 | 17.3 | 10.7 |
| C62 | 11.0 | 2.9 | 8.6 | 4.4 | 25.5 | 15.6 | 7.0 |
| C64 | 3.4 | 0.4 | 3.5 | 1.7 | 3.5 | 3.9 | 2.3 |
| C66 | 1.3 | 0.0 | 0.5 | 0.0 | 0.9 | 1.7 | 0.5 |
| C68 | 0.0 | 0.0 | 0.0 | 0.0 | 0.0 | 0.0 | 0.0 |
| Total | 100.0 | 100.0 | 100.0 | 100.0 | 100.0 | 100.0 | 100.0 |

**Table 12** Calculated results of example III of the amount of C4 which is bonded on a triglyceride molecule with L1 and/or L2.

75/25      wf(tuna)f / tributyrin

| Carbon number | Analyzed (wt%) | Calculated (wt%) | %Bu+x+L1/L2 (wt%) | %Bu+Bu+L1/L2 (wt%) | Bu wt% | wt% of the total added amount Bu bonded on a molecule with L1 and / or L2 |
|---|---|---|---|---|---|---|
| C12 | 6.7 | 8.4 | 0.0 | 0.0 | 0.0 | 0.0 |
| C20 | 0.1 | 0.0 | 0.0 | 0.0 | 0.0 | 0.0 |
| C22 | 1.4 | 1.0 | 0.0 | 0.0 | 0.0 | 0.0 |
| C24 | 6.3 | 5.6 | 0.0 | 0.0 | 0.0 | 0.0 |
| C26 | 9.4 | 8.0 | 0.0 | 0.0 | 0.0 | 0.0 |
| C28 | 6.1 | 5.7 | 0.0 | 3.9 | 1.1 | 3.9 |
| C30 | 7.3 | 15.1 | 0.0 | 13.5 | 3.6 | 12.7 |
| C32 | 0.2 | 0.0 | 0.0 | 0.0 | 0.0 | 0.0 |
| C34 | 0.4 | 0.4 | 0.0 | 0.0 | 0.0 | 0.0 |
| C36 | 1.7 | 1.7 | 0.0 | 0.0 | 0.0 | 0.0 |
| C38 | 3.5 | 3.4 | 0.3 | 0.0 | 0.1 | 0.4 |
| C40 | 5.9 | 5.4 | 2.4 | 0.0 | 0.2 | 0.8 |
| C42 | 8.0 | 8.7 | 6.6 | 0.0 | 0.6 | 2.2 |
| C44 | 8.1 | 9.0 | 7.7 | 0.0 | 0.7 | 2.5 |
| C46 | 6.2 | 5.7 | 5.1 | 0.0 | 0.4 | 1.6 |
| C48 | 11.0 | 7.4 | 7.3 | 0.0 | 0.6 | 2.1 |
| C50 | 0.9 | 0.4 | 0.0 | 0.0 | 0.0 | 0.0 |
| C52 | 1.2 | 0.9 | 0.0 | 0.0 | 0.0 | 0.0 |
| C54 | 2.1 | 1.5 | 0.0 | 0.0 | 0.0 | 0.0 |
| C56 | 3.0 | 2.1 | 0.0 | 0.0 | 0.0 | 0.0 |
| C58 | 3.6 | 2.4 | 0.0 | 0.0 | 0.0 | 0.0 |
| C60 | 3.6 | 2.7 | 0.0 | 0.0 | 0.0 | 0.0 |
| C62 | 2.9 | 2.2 | 0.0 | 0.0 | 0.0 | 0.0 |
| C64 | 0.4 | 1.2 | 0.0 | 0.0 | 0.0 | 0.0 |
| C66 | 0.0 | 1.1 | 0.0 | 0.0 | 0.0 | 0.0 |
| Total | 100.0 | 100.0 | | | 7.4 | 26.3 |

x = All fatty acids except Bu (C4:0)

/ = or

**Table 13** Calculated results of example III of the amount of C10:0 which is bonded on a triglyceride molecule with L1 and/or L2.

75/25     wf(tuna)f / tricaprin

| Carbon number | Analyzed (wt%) | Calculated (wt%) | Ca+x+L1/L2 (wt%) | Ca+Ca+L1/L2 (wt%) | Ca wt% | wt% of the total added amount Ca bonded on a molecule with L1 and / or L2 |
|---|---|---|---|---|---|---|
| C30 | 4.7 | 4.6 | 0.0 | 0.0 | 0.0 | 0.0 |
| C32 | 0.1 | 0.0 | 0.0 | 0.0 | 0.0 | 0.0 |
| C34 | 0.9 | 0.8 | 0.0 | 0.0 | 0.0 | 0.0 |
| C36 | 4.2 | 3.8 | 0.0 | 0.0 | 0.0 | 0.0 |
| C38 | 6.1 | 5.6 | 0.0 | 0.0 | 0.0 | 0.0 |
| C40 | 5.0 | 4.6 | 0.0 | 2.8 | 1.4 | 4.9 |
| C42 | 9.3 | 12.5 | 0.0 | 9.6 | 4.6 | 16.0 |
| C44 | 4.3 | 3.6 | 0.3 | 0.0 | 0.1 | 0.2 |
| C46 | 6.2 | 5.7 | 2.7 | 0.0 | 0.6 | 2.1 |
| C48 | 9.3 | 9.4 | 7.2 | 0.0 | 1.5 | 5.3 |
| C50 | 9.7 | 10.4 | 8.1 | 0.0 | 1.6 | 5.7 |
| C52 | 7.6 | 7.7 | 6.0 | 0.0 | 1.2 | 4.0 |
| C54 | 11.5 | 10.7 | 8.0 | 0.0 | 1.5 | 5.2 |
| C56 | 4.9 | 3.6 | 0.0 | 0.0 | 0.0 | 0.0 |
| C58 | 4.9 | 4.2 | 0.0 | 0.0 | 0.0 | 0.0 |
| C60 | 5.2 | 4.7 | 0.0 | 0.0 | 0.0 | 0.0 |
| C62 | 4.4 | 4.0 | 0.0 | 0.0 | 0.0 | 0.0 |
| C64 | 1.7 | 2.3 | 0.0 | 0.0 | 0.0 | 0.0 |
| C66 | 0.0 | 2.0 | 0.0 | 0.0 | 0.0 | 0.0 |
| Total | 100.0 | 100.2 | | | 12.4 | 43.4 |

x = All fatty acids except Ca (C10:0)

/ = or

**Table 14** Calculated results of example III of the amount of C22:0 which is bonded on a triglyceride molecule with L1 and/or L2.

75/25 wf(tuna)f / (BOO)s

| carbon number | Analyzed (wt%) | Calculated (wt%) | Be+x+L1/L2 (wt%) | Be+Be+L1/L2 (wt%) | Be wt% | wt% of the total added amount Be bonded on a molecule with L1 and / or L2 |
|---|---|---|---|---|---|---|
| C40 | 0.1 | 0.0 | 0.0 | 0.0 | 0.0 | 0.0 |
| C42 | 0.4 | 0.0 | 0.0 | 0.0 | 0.0 | 0.0 |
| C44 | 0.5 | 0.0 | 0.0 | 0.0 | 0.0 | 0.0 |
| C46 | 0.8 | 0.2 | 0.0 | 0.0 | 0.0 | 0.0 |
| C48 | 1.6 | 0.7 | 0.0 | 0.0 | 0.0 | 0.0 |
| C50 | 3.6 | 2.1 | 0.0 | 0.0 | 0.0 | 0.0 |
| C52 | 7.2 | 4.6 | 0.0 | 0.0 | 0.0 | 0.0 |
| C54 | 11.5 | 8.5 | 0.0 | 0.0 | 0.0 | 0.0 |
| C56 | 16.4 | 13.3 | 0.0 | 0.0 | 0.0 | 0.0 |
| C58 | 19.4 | 17.1 | 1.8 | 0.0 | 0.7 | 3.9 |
| C60 | 17.3 | 17.0 | 4.8 | 0.0 | 1.8 | 10.1 |
| C62 | 15.6 | 19.1 | 7.5 | 0.0 | 2.7 | 15.2 |
| C64 | 3.9 | 7.8 | 3.0 | 0.6 | 1.4 | 8.3 |
| C66 | 1.7 | 9.4 | 4.2 | 2.1 | 2.8 | 16.0 |
| Total | 100.0 | 99.8 | | | 9.3 | 53.4 |

x = All fatty acids except Be (C22:0)

/ = or

Table 15    Analyzed results of example III of the amount of C2-C12 and or C20-C24 which is bonded on a triglyceride molecule with L1 and/or L2.

|  | HPLC band | Band as % TAGs (g/100g) | Sum of Cno's containing target TAG in band (%wt) | Sum of target acids in band (%wt) | Target acids in target TAGs in band (g/100g) | Target acids in total FAME on TG (%wt) | Therefor target acids in target TAGs(%wt on total FAME) |
|---|---|---|---|---|---|---|---|
| in (TUNAf/ Butyrin) | A | 29.8 | 78.2 | 15.7 | 3.7 | 28.3 | 12.9 |
|  | B | 32.0 | 62.3 | 4.6 | 0.9 | 28.3 | 3.2 |
|  |  |  |  |  |  | Total: | 16.2 |
| in (TUNAf / BOOs) | A | 32.9 | 21.5 | 17.9 | 1.3 | 17.5 | 7.2 |
|  | B | 42.0 | 16.8 | 8.3 | 0.6 | 17.5 | 3.3 |
|  |  |  |  |  |  | Total: | 10.6 |

Table 16

| FAME results example IV | | | |
|---|---|---|---|
| FAME | D58 | in(D58 / caprin) | in(D58 / (BOO)s) |
| C10:0 | 0.0 | 29.1 | 0.0 |
| C12:0 | 0.0 | 0.1 | 0.0 |
| C12:other | 0.0 | 0.1 | 0.0 |
| C14:0 | 0.1 | 0.1 | 0.1 |
| C14:other | 0.5 | 0.3 | 0.3 |
| C16:0 | 0.1 | 0.3 | 0.7 |
| C16:1 | 1.0 | 0.9 | 0.7 |
| C16:other | 3.4 | 2.7 | 2.5 |
| C18:0 | 0.2 | 0.4 | 1.1 |
| C18:1 | 0.9 | 1.2 | 10.4 |
| C18:2 | 1.8 | 1.7 | 2.2 |
| C18:3 | 0.8 | 0.6 | 0.5 |
| C18:other | 3.5 | 2.4 | 2.2 |
| C20:0 | 0.0 | 0.1 | 1.1 |
| C20:1 | 0.1 | 0.1 | 0.1 |
| C20:2 | 0.0 | 0.0 | 0.0 |
| C20:3 | 0.4 | 0.4 | 0.4 |
| C20:4 | 4.6 | 3.3 | 3.3 |
| C20:5 | 16.1 | 10.8 | 10.4 |
| C20:other | 1.4 | 1.1 | 1.0 |
| C22:0 | 0.0 | 0.1 | 19.7 |
| C22:1 | 0.1 | 0.0 | 0.0 |
| C22:5 | 2.0 | 1.3 | 1.4 |
| C22:6 | 57.3 | 39.8 | 37.4 |
| C22:other | 5.6 | 3.5 | 4.1 |
| C24:0 | 0.0 | 0.0 | 0.4 |
| Total | 99.9 | 100.4 | 100.0 |

Table 17

| Carbon number results example IV | | | | |
|---|---|---|---|---|
| Carbon number | D58 / caprin (blend) | in(D58 / caprin) | D58 / (BOO)s (blend) | in(D58 / (BOO)s) |
| C30 | 43.0 | 10.4 | 0.0 | 0.0 |
| C32 | 0.5 | 0.7 | 0.0 | 0.0 |
| C34 | 0.5 | 1.6 | 0.0 | 0.0 |
| C36 | 0.4 | 2.2 | 0.0 | 0.0 |
| C38 | 0.1 | 2.9 | 0.0 | 0.8 |

Table 17   (continued)

| Carbon number results example IV | | | | |
|---|---|---|---|---|
| Carbon number | D58 / caprin (blend) | in(D58 / caprin) | D58 / (BOO)s (blend) | in(D58 / (BOO)s) |
| C40 | 0.2 | 9.3 | 0.3 | 1.8 |
| C42 | 0.2 | 19.4 | 1.0 | 3.5 |
| C44 | 0.7 | 2.3 | 0.8 | 3.3 |
| C46 | 0.7 | 2.9 | 1.1 | 3.8 |
| C48 | 0.5 | 5.0 | 1.0 | 2.2 |
| C50 | 1.3 | 7.5 | 1.7 | 2.2 |
| C52 | 0.9 | 10.6 | 1.5 | 2.4 |
| C54 | 2.3 | 14.0 | 2.6 | 4.2 |
| C56 | 4.1 | 1.4 | 5.9 | 7.8 |
| C58 | 7.3 | 1.8 | 17.0 | 11.7 |
| C60 | 9.9 | 2.8 | 15.8 | 16.6 |
| C62 | 12.2 | 3.1 | 39.0 | 19.0 |
| C64 | 9.0 | 2.1 | 7.9 | 10.6 |
| C66 | 6.2 | 0.0 | 4.4 | 10.1 |
| C68 | 0.0 | 0.0 | 0.0 | 0.0 |
| Total | 100.0 | 100.0 | 100.0 | 100.0 |

**Table 18**  Calculated results of example IV of the amount of C10:0 which is bonded on a triglyceride molecule with L1 and/or L2.

75/25     D58 / tricaprin

| Carbon number | Analyzed (wt%) | Calculated (wt%) | Ca+x+L1/L2 (wt%) | Ca+Ca+L1/L2 (wt%) | Ca wt% | wt% of the total added amount Ca bonded on a molecule with L1 and / or L2 |
|---|---|---|---|---|---|---|
| C30 | 10.4 | 5.0 | 0.0 | 0.0 | 0.0 | 0.0 |
| C32 | 0.7 | 0.0 | 0.0 | 0.0 | 0.0 | 0.0 |
| C34 | 1.6 | 0.2 | 0.0 | 0.0 | 0.0 | 0.0 |
| C36 | 2.2 | 1.6 | 0.0 | 0.0 | 0.0 | 0.0 |
| C38 | 2.9 | 2.5 | 0.0 | 0.0 | 0.0 | 0.0 |
| C40 | 9.3 | 6.0 | 0.0 | 4.1 | 2.1 | 7.0 |
| C42 | 19.4 | 16.4 | 0.0 | 14.4 | 6.9 | 23.6 |
| C44 | 2.3 | 0.8 | 0.0 | 0.0 | 0.0 | 0.0 |
| C46 | 2.9 | 2.0 | 1.2 | 0.0 | 0.3 | 0.9 |
| C48 | 5.0 | 5.3 | 4.2 | 0.0 | 0.9 | 3.0 |
| C50 | 7.5 | 7.4 | 6.5 | 0.0 | 1.3 | 4.5 |
| C52 | 10.6 | 12.4 | 11.7 | 0.0 | 2.3 | 7.7 |
| C54 | 14.0 | 17.0 | 16.4 | 0.0 | 3.0 | 10.4 |
| C56 | 1.4 | 1.1 | 0.0 | 0.0 | 0.0 | 0.0 |
| C58 | 1.8 | 2.2 | 0.0 | 0.0 | 0.0 | 0.0 |
| C60 | 2.8 | 3.8 | 0.0 | 0.0 | 0.0 | 0.0 |
| C62 | 3.1 | 4.8 | 0.0 | 0.0 | 0.0 | 0.0 |
| C64 | 2.1 | 6.0 | 0.0 | 0.0 | 0.0 | 0.0 |
| C66 | 0.0 | 5.4 | 0.0 | 0.0 | 0.0 | 0.0 |
| Total | 100.0 | 99.9 | | | 16.6 | 57.1 |

x = All fatty acids except Ca (C10:0)

/ = or

**Table 19** Calculated results of example IV of the amount of C22:0 which is bonded on a triglyceride molecule with L1 and/or L2.

75/25       D58 / (BOO)s

| Carbon number | Analyzed (wt%) | Calculated (wt%) | Be+x+L1/L2 (wt%) | Be+Be+L1/L2 (wt%) | Be wt% | wt% of the total added amount Be bonded on a molecule with L1 and / or L2 |
|---|---|---|---|---|---|---|
| C38 | 0.8 | 0.0 | 0.0 | 0.0 | 0.0 | 0.0 |
| C40 | 1.8 | 0.0 | 0.0 | 0.0 | 0.0 | 0.0 |
| C42 | 3.5 | 0.0 | 0.0 | 0.0 | 0.0 | 0.0 |
| C44 | 3.3 | 0.0 | 0.0 | 0.0 | 0.0 | 0.0 |
| C46 | 3.8 | 0.0 | 0.0 | 0.0 | 0.0 | 0.0 |
| C48 | 2.2 | 0.0 | 0.0 | 0.0 | 0.0 | 0.0 |
| C50 | 2.2 | 0.2 | 0.0 | 0.0 | 0.0 | 0.0 |
| C52 | 2.4 | 0.7 | 0.0 | 0.0 | 0.0 | 0.0 |
| C54 | 4.2 | 2.1 | 0.0 | 0.0 | 0.0 | 0.0 |
| C56 | 7.8 | 5.1 | 0.0 | 0.0 | 0.0 | 0.0 |
| C58 | 11.7 | 10.4 | 0.6 | 0.0 | 0.2 | 1.3 |
| C60 | 16.6 | 16.1 | 2.8 | 0.0 | 1.0 | 5.9 |
| C62 | 19.0 | 24.4 | 6.2 | 0.0 | 2.2 | 12.6 |
| C64 | 10.6 | 18.5 | 8.1 | 1.1 | 3.5 | 20.2 |
| C66 | 10.1 | 22.2 | 9.6 | 3.8 | 5.7 | 32.8 |
| C68 | 0.0 | 0.0 | 0.0 | 0.0 | 0.0 | 0.0 |
| Total | 100.0 | 99.7 | | | 12.7 | 64.6 |

x = All fatty acids except Be (C22:0)

/ = or

Table 20

| FAME results of the interesterified mixtures used for the blends. | | | |
|---|---|---|---|
| Fatty Acid Composition (wt%) | | | |
| | D40 | tributyrin/D40 | (BOO)s/D40 |
| C4:0 | 0.0 | 30 | 0 |
| C14:0 | 3.7 | 3 | 3 |
| C14unsat/C15 | 1.1 | 0 | 1 |
| C16:0 | 6.7 | 0 | 4 |
| C16:1 | 4.3 | 5 | 3 |
| C16unsat/C17 | 0.0 | 6 | 4 |
| C18:0 | 2.4 | 2 | 3 |
| C18:1 | 15.6 | 11 | 18 |
| C18:2 | 1.2 | 1 | 2 |
| C18:3 | 0.8 | 0 | 0 |
| C18:4 | 1.4 | 1 | 1 |
| Other C18 | 0.4 | 0 | 1 |
| C20:0 | 0.1 | 0 | 1 |
| C20:1 | 2.0 | 1 | 2 |
| C20:2 | 0.0 | 0 | 0 |
| C20:3 | 0.0 | 0 | 0 |
| C20:4 | 0.0 | 1 | 1 |
| C20:5 | 7.2 | 5 | 5 |
| Other C20 | 1.8 | 1 | 0 |
| C22:0 | 0.0 | 0 | 21 |
| C22:1 | 2.7 | 2 | 1 |
| C22:5 | 4.1 | 3 | 3 |
| C22:6 | 38.4 | 27 | 24 |
| Other C22 | 2.0 | 1 | 2 |

Table 21

| Carbon number results of the interesterified mixtures used for the blends. | | | | |
|---|---|---|---|---|
| Carbon Number | tributyrin/D40 | | (BOO)s/D40 | |
| | 0-time | 46 hours | 0-time | 46 hours |
| C12 | 30.0 | 7.7 | 0.0 | 0.0 |
| C20 | 0.0 | 0.1 | 0.0 | 0.0 |
| C22 | 0.0 | 2.0 | 0.0 | 0.0 |
| C24 | 0.0 | 7.4 | 0.0 | 0.0 |
| C26 | 0.0 | 8.0 | 0.0 | 0.0 |
| C28 | 0.0 | 6.2 | 0.0 | 0.0 |

Table 21   (continued)

| Carbon number results of the interesterified mixtures used for the blends. | | | | |
|---|---|---|---|---|
| Carbon Number | tributyrin/D40 | | (BOO)s/D40 | |
| | 0-time | 46 hours | 0-time | 46 hours |
| C30 | 0.0 | 13.1 | 0.0 | 0.0 |
| C32 | 0.0 | 1.2 | 0.0 | 0.0 |
| C34 | 0.0 | 1.2 | 0.0 | 0.0 |
| C36 | 0.0 | 1.6 | 0.0 | 0.0 |
| C38 | 0.0 | 3.3 | 0.0 | 0.0 |
| C40 | 0.0 | 5.6 | 0.0 | 0.0 |
| C42 | 0.3 | 6.5 | 0.3 | 0.4 |
| C44 | 1.9 | 9.4 | 0.7 | 1.6 |
| C46 | 2.0 | 5.9 | 2.6 | 2.0 |
| C48 | 1.6 | 8.8 | 2.4 | 1.7 |
| C50 | 2.8 | 1.7 | 3.4 | 3.5 |
| C52 | 5.1 | 1.1 | 5.8 | 5.7 |
| C54 | 9.3 | 1.6 | 8.8 | 10.3 |
| C56 | 9.9 | 1.6 | 11.6 | 13.9 |
| C58 | 11.8 | 2.0 | 17.6 | 17.7 |
| C60 | 11.2 | 2.0 | 13.7 | 14.9 |
| C62 | 9.2 | 1.6 | 27.0 | 18.2 |
| C64 | 2.7 | 0.3 | 4.2 | 5.2 |
| C66 | 2.2 | 0.0 | 1.9 | 4.5 |
| C68 | 0.0 | 0.0 | 0.0 | 0.4 |

Table 22a

| N-values of the blends. | | | | | |
|---|---|---|---|---|---|
| Application | Blend | N-5 n.s. (%) | N-10 n.s. (%) | N-20 n.s. (%) | N-35 n.s. (%) |
| Chocolate | Typical values | 85 - 95 | 80 - 95 | 55 - 65 | < 1 |
| | 99/1 CCB / in (D40/butyrin) | 88.2 | 85.6 | 59.0 | 0.1 |
| | 99/1 CCB / in(D40/ (BOO)s) | 89.3 | 85.9 | 59.5 | 0.0 |
| Bakery | Typical values | 40 - 80 | 30 - 75 | 20 - 45 | < 15 |
| | 40/50/10 POf37 / dfPOf / in(D40/butyrin) | 41.9 | 34.6 | 21.2 | 0.1 |
| | 40/50/10 POf37/ dfPOf / in(D40/(BOO)s) | 42.2 | 37.3 | 23.4 | 0.4 |

Table 22a   (continued)

| N-values of the blends. | | | | | |
|---|---|---|---|---|---|
| Application | Blend | N-5 n.s. (%) | N-10 n.s. (%) | N-20 n.s. (%) | N-35 n.s. (%) |
| Ice cream coatings | Typical values | 65 - 90 | > 35 | > 15 | < 1 |
| | 90/5/5 CN / CNs / in (D40/butyrin) | 72.3 | 37.9 | 31.2 | 0.2 |
| | 90/5/5 CN / CNs / in (D40/(BOO)s) | 74.7 | 61.7 | 34.2 | 0.0 |
| Ice cream | Typical values | 40 - 60 | | 15 - 30 | < 5 |
| | 90/10 PO/in (D40/butyrin) | 52.9 | | 21.4 | 3.6 |
| | 90/10 PO/in(D40/(BOO)s) | 52.0 | | 20.8 | 3.9 |
| Non dairy creams | Typical values | 1 - 70 | | 0 - 37 | 0 - 11 |
| | 40/40/20 nPOm / dfPOf / in(D40/butyrin) | 50.1 | | 12.5 | 0.2 |
| | 40/40/20 nPOm / dfPOf / in(D40/(BOO)s) | 55.4 | | 10.6 | 0.0 |
| Health margarines/ Health spreads | Typical values | 7 - 20 | | 3 - 12 | < 2.5 |
| | 13/77/10 HS1 / SF / in (D40/butyrin) | 14.7 | | 9.6 | 1.6 |
| | 13/77/10 HS1 / SF / in (D40/(BOO)s) | 17.7 | | 10.6 | 2.0 |

Table 22b

| N-values of the blends. | | | | | |
|---|---|---|---|---|---|
| Application | Blend | N-5 n.s. (%) | N-10 n.s. (%) | N-20 n.s. (%) | N-35 n.s. (%) |
| Confectionery filling | Typical values | > 50 | > 40 | > 25 | < 1 |
| | 60/20/20 nPOm / dfPOf / in(D40/butyrin) | 65.8 | 58.3 | 31.8 | 0.1 |
| | 60/20/20 nPOm / dfPOf / in(D40/(BOO)s) | 69.5 | 61.7 | 31.3 | 0.4 |
| Mayonnaise / Sauces | Typical values | 0 - 10 | 0 - 5 | < 1 | < 0.5 |
| | 90/10 SF/in (D40/butyrin) | 0.0 | 0.0 | 0.0 | 0.0 |
| | 90/10 SF/in(D40/(BOO)s) | 0.0 | 0.7 | 0.7 | 0.3 |
| Dressings | Typical values | 0 - 10 | 0 - 5 | < 1 | < 0.5 |
| | 90/10 SF/in (D40/butyrin) | 0.0 | 0.0 | 0.0 | 0.0 |
| | 90/10 SF/in(D40/(BOO)s) | 0.0 | 0.7 | 0.7 | 0.3 |

EP 0 739 589 B1

Table 23

| Evaluation results of example VII | | |
|---|---|---|
| OIL | VISCOSITY cP | SAUTER MEAN PARTICLE DIAMETER μM |
| Reference | 5940 | 19.30 |
| Sunflower oil / in(D40/tributyrin) 90/10 | 5633 | 16.79 |
| Sunflower oil / in(D40/(BOO)s) 90/10 | 5600 | 24.53 |

**Claims**

1. Triglyceride-composition, comprising at least two long chain poly-unsaturated fatty acids $L_1$ and $L_2$, both having at least 3 unsaturations and having at least 20 carbon atoms from which $L_1$ is the most abundant and $L_2$ is the second most abundant, wherein the triglyceride composition contains at least 20 wt% of $L_1$, while the weight ratio $L_1{:}L_2$ is at least 2, and the triglyceride composition also contains at least 2 wt% preferably at least 5 wt%, more preferably at least 15 wt%, most preferably at least 30 wt% of saturated fatty acids with 2-12 and/or 20-24 carbon atoms, whereas the triglyceride composition does not contain more than 10 wt% of saturated fatty acids with 16-18 carbon atoms, while at least 5 wt%, preferably at least 10 wt%, most preferably at least 20 wt% of the saturated $C_2$-$C_{12}$ or $C_{20}$-$C_{24}$ fatty acid residues is bonded on a triglyceride molecule, wherein at least $L_1$ and/or $L_2$ is present.

2. Triglyceride composition according to claim 1, wherein the amount of $L_1$ is more than 30 wt%, while the weight ratio $L_1{:}L_2$ is at least 3.

3. Triglyceride composition according to claims 1 or 2, wherein the amount of $L_1$ is at least 40 wt% and the weight ratio of $L_1{:}L_2$ is at least 3.5.

4. Triglyceride composition according to claims 1 - 3, wherein the amount of $C_{16}$-$C_{18}$ saturated fatty acids is less than 8 wt%, in particular less than 5 wt%.

5. Triglyceride composition according to claims 1 - 4, wherein $L_1$ = DHA (= $C_{22:6}$).

6. Triglyceride composition according to claims 1 - 5, wherein $L_2$ = EPA (= $C_{20:5}$).

7. Triglyceride composition according to claims 1 - 6, wherein $L_1$ = EPA and $L_2$ = DHA.

8. Blends of triglycerides comprising:

| 0.3 - 95 wt% | of triglycerides according to claims 1 - 7, and |
|---|---|
| 99.7 - 5 wt% | of a complementary fat, having a solid fat index at 10°C ($N_{10}$) that is either at least 5% more, or at least 5% less than the $N_{10}$ of the triglycerides according to claims 1 - 7. |

9. Blends of triglycerides, according to claim 8, comprising 5-80 wt%, in particular 20-70 wt% of the triglycerides according to claims 1 - 7, and 95 - 20 wt%, in particular 80-30 wt% of the complementary fat.

10. Blends according to claims 8 - 9, wherein the complementary fat has a solid fat content (NMR-pulse; not stabilized) of more than 15 at 20°C, preferably more than 20.

11. Blends according to claims 8 - 10, wherein the complementary fat is selected from cocoa butter equivalents, cocoa butter, palm oil or fractions thereof, palmkernel oil or fractions thereof, interesterified mixtures of above fats or fractions or hardened components thereof, or from liquid oil, such as sunflower oil, high oleic sunflower oil, soyabean oil, rapeseed oil, cottonseed oil, safflower oil, high oleic safflower oil, maize oil or MCT oils.

12. Blends according to claims 8 - 11, wherein the blend displays a solid fat content (NMR-pulse; not stabilized) of 0-85, preferably 10 - 70, most preferably 20 - 60 at 5°C and less than 30, preferably < 20, most preferably < 5 at 35°C.

**13.** Triglyceride compositions or blends containing them, according to claims 1 - 12, wherein the compositions or the blends contain an effective amount of an oxidation stabilizer, selected from the group consisting of: natural or synthetic tocopherols, BHT, BHA, free radical scavengers, enzymes with anti-oxidant properties.

**14.** Food products, comprising a fat phase, such as spreads, margarine, cream alternative, infant food, chocolate, confectionery, bakery products, sauces, ice-creams, ice-cream coatings, cheese, soups, mayonnaise, dressings, enteral or parental products, wherein the fat phase contains a fat according to claims 1 - 13.

**Patentansprüche**

**1.** Triglyceridzusammensetzung, umfassend mindestens zwei langkettige polyungesättigte Fettsäuren $L_1$ und $L_2$, beide mit mindestens 3 Unsättigungen und mindestens 20 C-Atomen, von welchen $L_1$ am häufigsten vorliegt und $L_2$ am zweithäufigsten vorliegt, worin die Triglyceridzusammensetzung mindestens 20 Gew.-% $L_1$ enthält, während das Gewichtsverhältnis $L_1$:$L_2$ mindestens 2 beträgt und die Triglyceridzusammensetzung ferner mindestens 2 Gew.-%, vorzugsweise mindestens 5 Gew.-%, insbesondere mindestens 15 Gew.-%, am meisten bevorzugt mindestens 30 Gew.-%, gesättigter Fettsäuren mit 2 bis 12 und/oder 20 bis 24 Kohlenstoffatomen enthält, während die Triglyceridzusammensetzung nicht mehr als 10 Gew.-% gesättigte Fettsäuren mit 16 bis 18 C-Atomen enthält, während mindestens 5 Gew.-%, vorzugsweise mindestens 10 Gew.-%, insbesondere mindestens 20 Gew.-%, der gesättigten $C_2$-$C_{12}$- oder $C_{20}$-$C_{24}$-Fettsäurereste an ein Triglyceridmolekül gebunden sind, worin mindestens $L_1$ und/oder $L_2$ vorliegen.

**2.** Triglyceridzusammensetzung nach Anspruch 1, worin die Menge an $L_1$ mehr als 30 Gew.-% beträgt, während das Gewichtsverhältnis $L_1$:$L_2$ mindestens 3 beträgt.

**3.** Triglyceridzusammensetzung nach den Ansprüchen 1 oder 2, worin die Menge an $L_1$ mindestens 40 Gew.-% beträgt und das Gewichtsverhältnis $L_1$:$L_2$ mindestens 3,5 ist.

**4.** Triglyceridzusammensetzung nach den Ansprüchen 1 bis 3, worin die Menge an $C_{16}$-$C_{18}$-gesättigten Fettsäuren weniger als 8 Gew.-%, vorzugsweise weniger als 5 Gew.-%, beträgt.

**5.** Triglyceridzusammensetzung nach den Ansprüchen 1 bis 4, worin $L_1$ = DHA (= $C_{22:6}$) ist.

**6.** Triglyceridzusammensetzung nach den Ansprüchen 1 bis 5, worin $L_2$ = EPA (= $C_{20:5}$) ist.

**7.** Triglyceridzusammensetzung nach den Ansprüchen 1 bis 6, worin $L_1$ = EPA und $L_2$ = DHA sind.

**8.** Triglyceridgemische, umfassend:

| | |
|---|---|
| 0,3 bis 95 Gew.-% | Triglyceride gemäß den Ansprüchen 1 bis 7 und |
| 99,7 bis 5 Gew.-% | eines komplementären Fettes mit einem Festfettindex bei 10°C ($N_{10}$), der entweder mindestens 5% größer oder mindestens 5% kleiner als der $N_{10}$ der Triglyceride gemäß den Ansprüchen 1 bis 7 ist. |

**9.** Gemische von Triglyceriden gemäß Anspruch 8, umfassend 5 bis 80 Gew.-%, insbesondere 20 bis 70 Gew.-%, der Triglyceride gemäß den Ansprüchen 1 bis 7 und 95 bis 20 Gew.-%, insbesondere 80 bis 30 Gew.-%, des komplementären Fettes.

**10.** Gemische nach den Ansprüchen 8 bis 9, worin das komplementäre Fett einen Festfettgehalt (NMR-Impuls, nicht stabilisiert) von mehr als 15 bei 20°C, vorzugsweise mehr als 20, aufweist.

**11.** Gemische gemäß den Ansprüchen 8 bis 10, worin das komplementäre Fett ausgewählt ist aus Kakaobutteräquivalenten, Kakaobutter, Palmöl oder Fraktionen davon, Palmkernöl oder Fraktionen davon, interesterifizierten Mischungen der obigen Fette oder Fraktionen oder gehärteten Komponenten davon, oder aus flüssigen Ölen, wie Sonnenblumenöl, Sonnenblumenöl mit hohem Ölsäuregehalt, Sojaöl, Rapsöl, Baumwollsamenöl, Safloröl, Safloröl mit hohem Ölsäuregehalt, Maisöl oder MCT-Ölen.

**12.** Gemische nach den Ansprüchen 8 bis 11, worin das Gemisch einen Festfettgehalt (NMR-Impuls, nicht stabilisiert) von 0 bis 85, vorzugsweise 10 bis 70, insbesondere 20 bis 60, bei 5°C und weniger als 30, vorzugsweise < 20, insbesondere < 5, bei 35°C zeigt.

**13.** Triglyceridzusammensetzungen oder sie enthaltende Gemische gemäß den Ansprüchen 1 bis 12, worin die Zusammensetzungen oder die Gemische eine wirksame Menge eines Oxidationsstabilisators enthalten, ausgewählt aus der aus natürlichen oder synthetischen Tocopherolen, BHT, BHA, Radikalfängern, Enzymen mit Antioxidationseigenschaften bestehenden Gruppe.

**14.** Eine Fettphase umfassende Nahrungsprodukte, wie Aufstriche, Margarine, Sahnealternative, Kindernahrung, Schokolade, Süßwaren, Backwaren, Soßen, Eiskrems, Eiskrembeschichtungen, Käse, Suppen, Mayonnaise, Dressings, enterale oder parenterale Produkte, worin die Fettphase ein Fett gemäß den Ansprüchen 1 bis 13 enthält.

## Revendications

**1.** Composition de triglycérides contenant au moins deux acides gras polyinsaturés à chaîne longue $L_1$ et $L_2$, ayant chacun au moins trois insaturations et ayant au moins 20 atomes de carbone, dans lesquels $L_1$ est le plus abondant et $L_2$ est le deuxième plus abondant, dans laquelle la composition de triglycérides contient au moins 20 % en masse de $L_1$, alors que le rapport entre $L_1$ et $L_2$ est au moins 2, et dans laquelle la composition de triglycérides contient également au moins 2 % en masse, de préférence au moins 5 % en masse et de façon plus préférée au moins 15 % en masse et de la façon la plus préférentielle au moins 30 % en masse d'acides gras saturés avec 2 - 12 et/ou 20 - 24 atomes de carbone, grâce à quoi la composition de triglycérides ne contient pas plus de 10 % en masse d'acides gras saturés avec 16 - 18 atomes de carbone alors qu'au moins 5 % en masse, de préférence au moins 10 % en masse et de la façon la plus préférentielle au moins 20 % en masse de résidus d'acides gras saturés en $C_2$ - $C_{12}$ ou en $C_{20}$ - $C_{24}$ sont liés sur une molécule de triglycéride, dans laquelle au moins $L_1$ et ou $L_2$ est présent.

**2.** Composition de triglycéride selon la revendication 1, dans laquelle la quantité de $L_1$ est supérieure à 30 % en masse, alors que le rapport en masse entre $L_1$ et $L_2$ est d'au moins 3.

**3.** Composition de triglycérides selon l'une des revendications 1 ou 2, dans laquelle la quantité de $L_1$ est d'au moins 40 % en masse et dans laquelle le rapport en masse entre $L_1$ et $L_2$ est d'au moins 3,5.

**4.** Composition de triglycérides selon l'une des revendications 1 à 3, dans laquelle la quantité d'acides gras saturés en $C_{16}$ - $C_{18}$ est inférieure à 8 % en masse, plus particulièrement, elle est inférieure à 5 % en masse.

**5.** Composition de triglycérides selon l'une des revendications 1 - 4, dans laquelle $L_1$ = DHA (=$C_{22:6}$).

**6.** Composition de triglycérides selon l'une des revendications 1 - 5, dans laquelle $L_2$ = EPA (= $C_{20:5}$).

**7.** Composition de triglycérides selon l'une des revendications 1 - 6, dans laquelle $L_1$ = EPA et $L_2$ = DHA.

**8.** Mélanges de triglycérides comprenant :

de 0,3 à 95 % en masse de triglycérides selon l'une des revendications 1 à 7 et
de 99,7 à 5 % en masse d'une matière grasse supplémentaire ayant un indice de graisse solide à 10°C au moins 5 % supérieur, ou au moins 5 % inférieur au $N_{10}$ des triglycérides selon l'une des revendications 1 à 7.

**9.** Mélanges de triglycérides selon la revendication 8, comprenant de 5 à 80 % en masse, plus particulièrement de 20 à 70 % de triglycérides selon l'une des revendications 1 à 7, et de 95 à 20 % en masse, plus particulièrement de 80 à 30 % en masse de la matière grasse supplémentaire.

**10.** Mélanges selon les revendications 8 - 9, dans lesquels la matière grasse supplémentaire a une teneur en matière grasse solide (impulsions RMN ; non stabilisé) supérieure à 15 à 20°C, de préférence supérieure à 20.

**11.** Mélanges selon l'une des revendications 8 à 10, dans lesquels la matière grasse supplémentaire est sélectionnée à partir des équivalents du beurre de cacao, du beurre de cacao, de l'huile de palme ou de fractions de celle-ci, de mélanges inter-estérifiés des matières grasses ci-dessus ou des fractions ou des composants durcis de celles-ci, ou à partir d'huile liquide telle que l'huile de tournesol, l'huile de tournesol hautement oléique, l'huile de soja, l'huile de colza, l'huile de graine de coton, l'huile de carthame, l'huile de carthame hautement oléique, l'huile de maïs ou les huiles MTC.

12. Mélanges selon l'une des revendications 8 - 11, dans lesquels le mélange a une teneur en matière grasse solide (impulsion RMN ; stabilisé) de 0 - 85, de préférence 10 - 70, de façon plus préférentielle 20 - 60 à 5°C et inférieure à 30, de préférence inférieure à 20 et de la façon la plus préférentielle inférieure à 5 à 55°C.

13. Compositions de triglycérides ou mélanges les contenant selon l'une des revendications 1 à 12, dans lesquelles les compositions ou les mélanges les contenant contiennent une quantité efficace d'un stabilisateur d'oxydation sélectionné à partir du groupe composé de : tocophérols naturels ou synthétiques, BHT, BHA, des fixateurs de radicaux libres, des enzymes ayant des propriétés antioxydantes.

14. Produits alimentaires comprenant une phase grasse, tels que des pâtes à tartiner, de la margarine, des produits de substitution de la crème, des aliments pour bébés, du chocolat, des bonbons, des produits de pâtisserie, des sauces, des crèmes glacées, des enrobages de crèmes glacées, du fromage, des soupes, de la mayonnaise, des vinaigrettes, des produits destinés à être administrés par voie entérale ou parentérale, et dans lesquels la phase grasse contient une matière grasse selon l'une des revendications 1 à 13.